# FASCICULE DE BREVET EUROPEEN

(11) **EP 0 269 501 B1**
(45) Date de publication et mention de la délivrance du brevet: **15.06.1994**
(21) Numéro de dépôt: 87402490.4
(22) Date de dépôt: 04.11.1987
(51) Int. Cl.: A01C 17/00, A01C 15/00, B65G 31/04

(54) **Epandeur de produits granuleux par projection forcée**
Schleuderstreuer für körniges Material
Broadcaster for granulated produce

(30) Priorité: 05.11.1986 FR 8615424
(43) Date de publication de la demande: 01.06.1988
(73) Titulaire: NODET-GOUGIS, F-77130 Montereau (FR)
(72) Inventeur: Grataloup, Xavier, F-77130 Montereau (FR); Baret, Denis, F-77130 Montereau (FR)
(74) Mandataire: Chassagnon, Jean-Alain

(56) Documents cités:
- DE-A- 2 723 101
- DE-B- 1 266 043
- FR-A- 1 060 948
- FR-A- 1 093 375
- FR-A- 1 181 373
- US-A- 3 297 143
- US-A- 3 746 264

## Description

La présente invention se rapporte à un appareil d'épandage agricole, appelé également épandeur dans la suite du présent mémoire, qui est destiné à l'épandage par projection forcée de produits en grains ou en granulés pour le traitement des sols, tels que des engrais, des herbicides, des insecticides, et qui peut également être utilisé pour semer des graines de petites tailles, dans un mode de semis dit "à la volée".

Pour réaliser de tels épandages par projection forcée il a déjà été proposé d'utiliser des épandeurs comprenant:
un châssis porteur sur lequel est monté un moins un organe de transmission d'un mouvement de rotation qui est destiné à être accouplé à un moteur,
une trémie, montée sur le châssis et destinée à contenir une charge de produits granuleux pouvant s'écouler par un moins une ouverture à la base de la trémie,
des moyens de mise en vitesse et de projection forcée des produits granuleux, qui sont supportés par le châssis et alimentés en produits granuleux à partir d'au moins une ouverture de la base de la trémie, et
des moyens de répartition des produits granuleux projetés, lesdits moyens de répartition étant également supportés par le châssis,
et dans lequel lesdits moyens de mise en vitesse et de projection forcée sont agencés en au moins un groupe lanceur, comprenant un premier rouleau monté en rotation sur le châssis autour de son axe sensiblement fixe et dont la surface latérale externe forme une première surface sans fin mobile délimitant, avec une seconde surface sans fin mobile, une goulotte de projection ayant une entrée et une sortie qui sont de section de passage progressivement et respectivement et décroissante et croissante, l'une au moins des surfaces sans fin étant entraînée positivement à partir dudit organe de transmission et constituant une surface menante, qui entraîne les produits granuleux introduits dans l'entrée de la goulotte de projection jusqu'à la sortie de cette dernière, de sorte que ces produits granuleux reçoivent, entre les deux surfaces sans fin mobiles, une vitesse linéaire qui assure leur projection hors de la goulotte de projection.

Dans l'épandeur du type précité proposé dans le brevet des Etats-Unis d'Amérique N^{o} 3 746 264, le premier rouleau est cylindrique et d'axe sensiblement horizontal, les moyens de répartition reçoivent les produits granuleux projetés hors de la goulotte de projection, et la seconde surface sans fin est définie par la surface latérale externe d'une bande sans fin, en position inférieure, passant autour d'une poulie arrière accouplée à un moyen d'entraînement, et d'une poulie avant qui estune simple poulie de renvoi, et la bande sans fin coopère avec le rouleau cylindrique en position supérieure, et faisant office de rouleau tendeur appliqué contre le brin supérieur de la bande sans fin, entre les poulies avant et arrière. La position des axes de rotation des poulies ainsi que l'inclinaison de ces axes par rapport à l'axe de rotation du rouleau cylindrique sont réglables, afin d'assurer une bonne tension à la bande sans fin et une orientation convenable de sa direction de défilement. Les moyens d'alimentation en matière à projeter de la goulotte délimitée entre le rouleau et la bande sans fin peuvent être un dispositif convoyeur à bande ou à chaîne ou encore un dispositif d'alimentation volumétrique, par exemple à vis sans fin. De plus, les paliers dans lesquels la poulie avant est montée en rotation sont fixés sur un support qui est lui-même monté pivotant autour d'un axe sur le châssis, de sorte que la position de l'axe de rotation de la poulie avant est réglable sur un arc de cercle, afin de régler l'angle de la tangente à la bande par rapport à l'horizontale, au niveau du point de lancement de la matière projetée. Le réglage de cet angle constitue donc un premier réglage de la trajectoire dans un plan vertical, ce réglage affectant la distance à laquelle la matière est projetée ainsi que le spectre de distribution des produits granuleux. Le réglage de cet angle peut être assuré manuellement ou à l'aide d'un moyen d'hydraulique commandé à distance. Par ailleurs, les moyens de répartition consistent en un déflecteur fixe assurant la division du flux de sortie en plusieurs jets répartis ou distribués dans un plan vertical grâce à une pluralité de doigts de déflexion, en forme de bandes rectangulaires allongées, disposées selon des angles différents afin de dévier les produits granuleux sortant de la goulotte de projection entre le rouleau cylindrique et la bande sans fin selon différentes trajectoires réparties dans le plan vertical. Ainsi, pour modifier la distribution au sol des produits granuleux projetés, l'épandeur décrit dans le brevet américain 3.746.264 permet de modifier l'angle de la tangente à la bande sans fin, au niveau du point d'éjection, sur la largeur des doigts de déflexion ainsi que sur la valeur des angles de déflexion associés, c'est-à-dire des angles d'inclinaison des différents doigts de déflexion sur la direction de déplacement des produits granuleux projetés, sortant de la goulotte de projection.

Cependant, les épandeurs du type décrit dans le brevet américain 3.746.264, et dans lesquels la projection de la matière est assurée par la coopération d'un rouleau cylindrique et d'une bande sans fin, présentent de nombreux inconvénients, relatifs notamment à l'encrassement par la matière projetée, à l'imprécision du jet de la matière projetée et au coût de construction du dispositif, et c'est peut-être en raison de ces inconvénients majeurs qu'aucun épandeur de ce type n'est, à la connaissance de la demanderesse, actuellement disponible dans le commerce.

En effet, l'utilisation d'un dispositif à bande sans fin dans un milieu particulièrement poussiéreux ne va pas sans poser un problème d'encrassement. Si la bande sans fin ne s'encrasse pas sur sa surface externe, du fait de sa déformation et de son allongement, lors de son enroulement sur les poulies ou galets de renvoi, on constate par contre un encrassage sur la face interne de la bande sans fin, qui est toujours en contact fermé avec ces poulies, galets ou tambours, et surtout en encrassement important de ces derniers.

De plus, tout flottement de la portion de la bande sans fin qui porte les produits granuleux au-delà de la zone de pincement avec le rouleau cylindrique, donne un jet qui est géométriquement défini de manière imprécise, et donc plus difficile à épanouir avec la précision requise à l'aide d'un déflecteur. En outre, toute zone déformée de la bande sans fin, en particulier un allongement sur une partie de sa largeur, produit lors de son enroulement partiel autour du rouleau cylindrique, une zone d'entraînement de produits granuleux sur une épaisseur plus grande que pour le reste de la bande sans fin. Cette irrégularité est à l'origine d'une nappe projeté de produit granuleux ayant une épaisseur non uniforme, ce qui empêche une répartition précise des produits granuleux. Ceci s'ajoute au fait que la flexion transversale de la bande sans fin, lors de la prise en charge des produits granuleux, impose déjà un réglage délicat du déflecteur de répartition. En particulier, à l'instant précis de la séparation entre le rouleau cylindrique et la bande sans fin, les deux surfaces sans fin en mouvement, en regard l'une de l'autre, n'ont pas de trajectoires identiques (trajectoire sensiblement rectiligne pour la bande sans fin, et trajectoire circulaire pour le rouleau) et sont plus ou moins déformées par les produits granuleux comprimés entre elles, alors qu'elles présentent des caractéristiques de souplesse également très différentes; il en résulte que le jet de produits granuleux propulsés a une direction imprécise, qui varie particulièrement en fonction de l'épaisseur de la nappe de produits granuleux comprimée. Ceci constitue une difficulté majeure pour dévier et épanouir avec précision le jet de produits granuleux projetés, à l'aide d'une déflecteur.

Par ailleurs, il est pratiquement impossible de réaliser un épandeur à rouleau cylindrique coopérant avec une bande sans fin qui soit économique, non seulement sur le plan de la fabrication, mais également sur celui de la maintenance et de l'entretien, car il est nécessaire de prévoir des moyens permettant de régler la tension de la bande, des moyens permettant d'éviter et/ou de corriger le désalignement de la bande transporteuse, ainsi que des moyens permettant de régler la position du déflecteur lorsque les positions relatives du rouleau et des galets ou poulies de renvoi de la bande sans fin sont modifiées. Il est également utile de rappeler qu'une construction à bande sans fin comporte nécessairement un nombre important d'axe montés en rotation, et donc de paliers.

Enfin, pour qu'un déflecteur soit insensible aux variations notamment de granulométrie, de forme des grains et de débit des produits granuleux projetés, il faut que les surfaces qui définissent les différentes directions de répartition souhaitées soient abordées par les produits granuleux sous un angle très faible, afin d'éviter les chocs et, en conséquence, des rebonds incontrôlables des produits granuleux. En conséquence, un déflecteur agissant dans un plan vertical et tel que proposé dans le brevet américain précité n'est pas accceptable pour être utilisé avec des produits granuleux aussi variés que ceux rencontrés en pratique. En effet, les différentes doigts de déflexion présentent des angles importants par rapport au jet de produits projetés, certains de ces angles étant très importants. De plus, ces doigts de déflexion ne permettent jamais de projeter des produits granuleux sous l'épandeur et vers le centre de ce dernier.

Le dispositif décrit dans le brevet américain N^{o} 3.297.143 comprend deux éléments dont l'un a une forme de tambour très souple, qui se déforme sous l'effet de l'élément conjugué qui est constitué d'une série de composants non cylindriques. De ce fait, les grains sont respectés mais il n'y a pas assez de vitesse, bien que cela se produise sur une assez grande largeur de la périphérie des deux éléments. De plus, il n'y a pas de nappe de sortie, mais un nuage de grains ayant une vitesse différente et il y a aussi risque de bourrage. Enfin, on ne peut pas avoir un déflecteur d'épanouissement en aval de ce nuage de section irrégulière.

Par l'invention, on se propose de remédier à ces différents inconvénients, et l'invention a pour objet un épandeur de produits granuleux qui soit fiable, économique à construire et à entretenir, qui permette une excellente définition géométrique des trajectoires des produits granuleux projetés et la couverture totale de la largeur d'épandage y compris sur la bande de terrain audessus de laquelle l'épandeur et le tracteur qui le porte ou le remorque sont déplacés.

A cet effet, l'épandeur selon l'invention, du type présenté ci-dessus, se caractérise en ce que la seconde surface sans fin mobile est également formée par la surface latérale externe d'un second rouleau, monté en rotation sur le châssis autour de son axe, et dans une position telle aue le premier et le second rouleaux, dont l'un au moins est garni d'un revêtement périphérique en un matériau élastiquement déformable, soient sensiblement tangents extérieurement l'un à l'autre, de sorte que les produits granuleux sont projetés hors de la goulotte de projection en une nappe mince centrée sur le plan tangent commun aux deux rouleaux.

Une telle réalisation a pour avantages impotants que les deux rouleaux coopérant pour délimiter la goulotte de projection, garantissent une stabilité géométrique excellente de la nappe projetée dans le plan tangant commun aux deux rouleaux, c'est-à-dire que le plan moyen de la nappe projetée, selon son épaisseur, est prétiquement confondu avec le plan tangent commun aux deux rouleaux. La définition géométrique de la nappe projetée est donc bien plus précise lorsqu'elle résulte de la coopération de deux rouleaux que lorsqu'elle est assurée par la coopération d'un seul rouleau cylindrique avec une bande sans fin. De plus, du fait des déformations de la surface latérale externe de l'un au moins des deux rouleaux, mais de préférence de chacun d'eux, lors du passage entre les deux rouleaux des produits granuleux, et en raison des revêtements périphériques en un matériau élastiquement déformable des rouleaux, puis du fait du lâché des produits granuleux à la suite de leur pincement entre les rouleaux, et enfin à cuase de la centrifugation, on peut constater que les rouleaux ne s'encrassent pas à l'usage. Enfin, par rapport à une réalisation comportant un rouleau cylindrique et une bande sans fin, une réalisation à deux rouleaux selon l'invention présente l'avantage de comporter moins d'axes, donc moins de paliers, ne nécessite aucun élément tendeur de bande, et présente moins de risque de désalignement.

Selon l'invention l'épandeur de produits granuleux par projection forcée comprend:
- un châssis porteur sur lequel est monté au moins un organe de transmission d'un mouvement de rotation qui est destiné à être accouplé à un moteur,
- une trémie montée sur le châssis et destinée à contenir une charge de produits granuleux pouvant s'écouler par au moins une ouverture à la base de la trémie,
- des moyens de dosage alimentés en produits granuleux à partir d'au moins une ouverture de la base de la trémie,
- des moyens de mise en vitesse et de projection forcée des produits granuleux, qui sont supportés par le châssis et alimentés en produits granuleux à partir des moyens de dosage, et
- des moyens de répartition des produits granuleux projetés, lesdits moyens de répartition étant également supportés par le châssis.

Lesdits moyens de mise en vitesse et de projection forcée sont agencés en au moins un groupe lanceur, comprenant un premier rouleau monté en rotation sur le châssis autour de son axe fixe, et dont la surface latérale externe forme une première surface sans fin mobile délimitant, avec une seconde surface sans fin mobile, une goulotte de projection ayant une entrée et une sortie qui sont de section de passage progressivement et respectivement décroissante et croissante. L'une au moins des surfaces sans fin est entraînée positivement à partir dudit organe de transmission et constitue une surface menante qui entraîne les produits granuleux introduits dans l'entrée de la goulotte de projection jusqu'à la sortie de cette dernière de sorte que ces produits reçoivent, entre les deux surfaces sans fin mobiles, une vitesse linéaire qui assure leur projection.

La seconde surface sans fin mobile est également formée par la surface latérale externe d'un second rouleau monté en rotation sur le châssis autour de son axe et dans une position telle que le premier rouleau et le second rouleau dont l'un au moins des rouleaux est garni d'un revêtement périphérique en un matériau élastiquement déformable, soient sensiblement tangents extérieurement l'un à l'autre, de sorte que les produits granuleux soient projetés hors de la goulotte de projection en une nappe mince. Les rouleaux sont des rouleaux cylindriques, dont les axes sont sensiblement parallèles l'un à l'autre et de préférence sensiblement horizontaux.

Selon l'invention destinée à l'épandage de produits granuleux sur de grandes largeurs d'épandage et avec une densité importante de distribution, l'épandeur comprend des moyens d'injection des produits granuleux dans la goulotte de projection d'au moins un groupe lanceur, ces moyens d'injection comprenant une goulotte d'injection, ayant une entrée et une sortie dont les sections de passage sont progressivement et respectivement décroissante et croissante, et qui est située entre la base de la trémie et la goulotte de projection de chaque groupe lanceur correspondant, et délimitée par les surfaces latérales externes de deux rouleaux cylindriques sensiblement tangents extérieurement l'un à l'autre et montés en rotation sur le châssis, chacun autour de son axe sensiblement parallèle à l'axe du second rouleau de chaque groupe lanceur correspondant, l'un au moins des deux rouleaux qui délimitent la goulotte d'injection étant positivement entraîné en rotation à partir de l'organe de transmission du châssis, de facon à constituer un rouleau menant, entraînant les produits granuleux introduits depuis la base de la trémie dans l'entrée de la goulotte d'injection jusqu'à la sortie de cette dernière en leur transmettant une vitesse linéaire telle que les produits granuleux quittent la sortie de la goulotte d'injection en une nappe mince centrée sur le plan tangent commun aux deux rouleaux délimitant ladite goulotte d'injection, les moyens d'injection comprenant également, pour chaque groupe lanceur correspondant, un déflecteur d'injection, supporté par le châssis et qui est cintré, à concavité tournée vers le premier rouleau, et qui guide la nappe de produits granuleux quittant la sortie de la goulotte d'injection jusqu'à l'entrée de la coulotte de projection. Cette réalisation de l'invention est très avantageuse, car la mise en vitesse préalable des produits granuleux dans les moyens d'injection permet d'augmenter la pression d'alimentation de la goulotte de projection en produits granuleux, et donc d'assurer la prise en charge d'un débit important par les deux rouleaux délimitant la goulotte de projection.

Avantageusement de plus, le plan tangent commun aux deux rouleaux qui délimitent la goulotte d'injection est sensiplement perpendiculaire au plan tangent commun au premier et second rouleaux délimitant la goulotte de projection de chaque groupe lanceur correspondant. On obtient ainsi une réalisation dans laquelle il est à la fois possible de disposer convenablement les deux rouleaux délimitant la goulotte de projection pour que leur plan tangent commun soit dirigé vers l'extérieur et vers le haut, ce qui est favorable à l'obtention de trajectoires de grande portée, et de disposer favorablement les deux rouleaux délimitant la goulotte d'injection pour que leur plan tangent commun soit dirigé vers l'intérieur et vers le haut, ce qui est favorable à une excellente alimentation de la goulotte d'injection à partir de la trémie, car cette alimentation en produits granuleux peut alors être assurée par des moyens de dosage faisant tomber par gravité entre deux rouleaux du group lanceur correspondant, qui sont dans ce cas les deux rouleaux délimitant la goulotte d'injection, une nappe de produits granuleux dont le plan moyen, selon son épaisseur, est sensiblement confondu avec le plan tangent commun à ces deux rouleaux. Dans une telle réalisation, la combinaison avantageuse des moyens de dosage, des moyens d'injection et des moyens de mise en vitesse et de projection permet d'assurer la prise en charge des plus grands débits de produits granuleux au niveau de la goulotte de projection. Cependant, afin de limiter l'encombrement de l'épandeur et d'économiser un rouleau, il est avantageux que le premier rouleau délimitant une goulotte de projection alimentée depuis une goulotte d'injection, constitue simultanément l'un des deux rouleaux délimitant ladite goulotte d'injection, l'autre étant un troisième rouleau, et l'axe du premier rouleau étant situé au-dessus de l'axe du second rouleau correspondant, et, de préférence, à l'intérieur de l'axe de ce dernier par rapport à la base de la trémie.

Dans un mode de réalisation préféré, qui permet la réalisation d'épandeurs comportant deux groupes lanceurs disposés symétriquement l'un de l'autre, par rapport à un plan vertical médian de la trémie, chaque groupe lanceur comprend ses propres moyens d'injection, et l'axe de son troisième rouleau est situé à l'intérieur de l'axe du second rouleau correspondant, par rapport à la base de la trémie, et a un niveau situé entre les niveaux des axes des premier et second rouleaux du groupe lanceur correspondant, le ou les rouleaux positivement entraînés en rotation à partir de l'organe de transmission du châssis étant, pour chaque groupe lanceur, soit le premier rouleau soit les second et troisième rouleaux.

Par contre, si l'on recherche une variante plus économique bien que comportant deux groupes lanceurs, tout en se satisfaisant d'un appareil offrant une largeur d'épandage réduite, les axes des premier et troisième rouleaux sont sensiblement situés dans un même plan horizontal, de sorte qu'ils délimitent une goulotte d'injection sensiblement verticale, et le troisième rouleau délimite simultanément, avec un quatrième rouleau cylindrique, également monté en rotation sur le châssis autour de son axe sensiblement parallèle aux axes des premier, second et troisième rouleaux et situé et dessous dudit plan horizontal, de sorte que les troisième et quatrième rouleaux soient sensiblement tangents extérieurement l'un à l'autre, une seconde goulotte de projection analogue à celle délimitée entre les premier et second rouleaux, l'un au moins des troisième et quatrième rouleaux étant garni d'une revêtement périphérique en un matériau élastiquement déformable, et l'un au moins des troisième et quatrième rouleaux étant positivement entraîné en rotation à partir de l'organe de transmission du châssis, de sorte que les moyens de mise en vitesse et de projection forcée sont agencés en deux groupes lanceurs qui ont une goulotte d'injection commune, qui comprennent l'une les premier et second rouleaux et l'autre les troisième et quatrième rouleaux, et qui coopèrent chacun avec un dispositif de répartition associé, les moyens d'injection comprenant également, en plus de la goulotte d'injection commune, et du déflecteur d'injection à concavité tourné vers le premier rouleau, et qui ne s'étend que sur une partie de la dimension axiale de la goulotte d'injection, un second déflecteur d'injection cintré, à concavité tournée vers le troisième rouleau, et supporté par le châssis et monté en position adjacente audit déflecteur d'injection, entre les premier et troisième rouleaux et sous la sortie de la goulotte d'injection, le long de la partie restante de la dimension axiale de cette dernière, de sorte que la nappe de produits granuleux sortant de la goulotte d'injection est divisée en deux portions dont chacune est guidée par un déflecteur d'injection correspondant jusqu'à l'entrée de la goulotte de projection correspondante. Ainsi, à partir d'une unique nappe de produits granuleux mise en vitesse dans une unique goulotte d'injection, on obtient deux nappes de produits granuleux projetés, de largeur plus réduite, et chacune dirigée dans une direction sensiblement opposée à l'autre. Afin d'assurer dans ce cas une certaine symétrie de répartition, les second et quatrième rouleaux et les deux déflecteurs d'injection ont une même dimension axiale, qui est la moitié de celle des premier et troisième rouleaux et, d'une part, les second et quatrième rouleaux et, d'autre part, les deux déflecteurs d'injection sont décalés axialement l'un par rapport à l'autre sensiblement de la valeur de leur dimension axiale, de façon à diviser la nappe de produits granuleux sortant de la goulotte d'injection en deux portions sensiblement égales, et à limiter au maximum l'encombrement axial des second et quatrième rouleaux.

Dans les autres variantes, les moyens de répartition peuvent être de différents types. S'ils sont du type dans lequel ils comprennent, pour au moins un groupe lanceur, un déflecteur de répartition, qui divise la nappe de produits granuleux sortant de la goulotte de projection correspondante en fractions contiguës de nappes qui sont déviées, dans un plan perpendtculaire aux axes des premier et second rouleaux délimitant ladite goulotte de projection, selon des trajectoires différentes présentant des orientations angulaires qui varient progressivement entre deux inclinaisons extrêmes par rapport à la direction de déplacement de la nappe de produits granuleux à la sortie de ladite goulotte de projection, comme cela est déjà connu par le brevet Américain précité, il est alors avantaceux que, selon des caractéristiques propres à l'invention, le déflecteur de répartition présente une surface de déflexion continue et cintrée, à concavité tournée vers l'axe dudit second rouleau, et délimitée entre un bord amont, présentant une inclinaison pratiquement nulle sur le plan tangent commun au premier et second rouleaux et sensiblement contenu dans ledit plan tangent, deux bords latéraux, et un bord aval défini par une découpe incurvée entre les extrémitées aval des deux bords latéraux, de sorte que l'angle de déviation formé, pour tous points de ladite découpe, entre ledit plan tangent commun et la tangente à ladite surface de déflexion passant par ledit point et dans le plan correspondant perpendiculaire aux axes desdits premier et second rouleaux, est un angle qui, lorsque ledit point est déplacé d'une extrémité à l'autre de la découpe, varie de manière continue entre une valeur minimale, sur un bord latéral, et une valeur maximale, sur l'autre bord latéral, de sorte que lesdites fractions de nappe contiguës soient guidées sans éclatement par la surface déflectrice, de son bord amont à son bord aval, au-delà duquel elles poursuivent librement des trajectoires qui sont progressivement inclinées selon les tangentes à la surface de déflexion le long de son bord aval, et d'un bord latéral à l'autre de ladite surface de déflexion. On assure ainsi la couverture totale d'une largeur d'épandage par une densité de distribution sensiblement égale des produits granuleux sur cette largeur d'épandage et, avantageusement, la valeur minimale de l'angle de déviation est pratiquement nulle alors que la valeur maximale est de l'ordre de 135°, de sorte que cette largeur d'épandage s'étend du point de chute des produits granuleux ayant suivi une trajectoire pratiquement libre depuis la sortie de la goulotte de projection jusqu'au point de chute des produits granuleux ayant suivi la trajectoire la plus déviée et situé sous l'épandeur lui-même.

Cependant, afin d'éviter des chocs trop importants des produits granuleux sur les végétations et pousses déjà levées, lorsque les produits granuleux sont épandus en suivant les trajectoires rasantes que l'on obtient avec des déflecteurs à fractionnement de la nappe projetée dans un plan vertical, l'invention propose également, selon les caractéristiques qui lui sont propres, d'utiliser des moyens de répartition différents qui comprennent, pour au moins un groupe lanceur, un déflecteur d'épanouissement de la nappe projetée de produits granuleux dans un plan non vertical et sensiblement parallèle aux axes des rouleaux délimitant la goulotte de projection correspondante. Selon l'invention, un tel déflecteur présente un faisceau de surfaces de déflexion qui son espacées les unes des autres sensiblement dans la direction des axes des rouleaux, sensiblement perpendiculaires à un plan parallèle auxdits axes, et cintrées chacune entre son bord amont et son bord aval, en présentant leurs concavités dans l'un des deux sens desdits axes, de sorte que les plans tangents auxdites surfaces de déflexion le long de leurs bords avals soient inclinés sur lesdits axes d'un angle qui varie progressivement entre une valeur minimale et une valeur maximale, d'une extrémité à l'autre du faisceau, afin que les surfaces de déflexion délimitent entre elles des passages cintrés et adjacents présentant chacun une entrée et une sortie entre lesdits bords respectivement amont et aval des deux surfaces de déflexion voisines qui le délimitent, les bords amonts des surfaces de déflexion divisant la nappe projetée en fractions contiguës de nappes dont chacune est déviée dans l'un des passages qui la guide jusqu'à sortie, au-delà de laquelle elle poursuit librement une trajectoire sensiblement dans le plan tangent à la surface de déflexion qui l'a déviée et au niveau du bord de cette surface de déflexion. Afin d'obtenir la plus grande largeur d'épandage, la valeur maximale précitée est de 90° et la valeur minimale est telle que la trajectoire correspondante ramène la fraction de nappe qui suite cette trajectoire vers le point vertical passant par la base de la trémie d'alimentation du groupe lanceur correspondant. Avantageusement de plus, chaque surface de déflexion présente une partie amont plane, faiblement inclinée sur la direction d'écoulement de la nappe projetée à l'entrée des passages, de préférence d'un angle inférieur à 10°, et suffisamment longue pour que toute la fraction de nappe se déplaçant selon ladite direction d'écoulement et guidée par ladite surface de déflexion, rencontre cette partie amont de cette dernière avant d'être déviée par une partie cintrée de cette surface de déflexion, de sorte que la fraction de nappe correspondante soit mise en contact avec la surface de déflexion pratiquement sans rebond des produits granuleux sur cette surface.

De plus, il est préférable que chaque surface de déflexion présente également une partie aval plane, faisant suite à une partie cintrée, afin de déterminer l'orientation de la trajectoire de la fraction de nappe correspondante au-delà du bord aval correspondant.

Dans une forme avantageuse de réalisation, permettant d'assurer un bon confinement de chaque fraction de nappe déviée, chaque passage cintré est délimité par un canal ayant un fond, deux parois latérales en regard l'une de l'autre, dont l'une est convexe et l'ature est concave et définit la surface de déflexion correspondant audit passage, chaque canal étant de préférence fermé par une paroi supérieure, en regard du fond. Dans un mode avantageusement simple de réalisation, les fonds des canaux sont constitués par une unique plaque de base, les parois latérales des canaux sont définies par les faces opposées de cloisons cintrées fixées sur la plaque de base perpendiculairement à cette dernière, et les éventuelles parois supérieures des canaux sont constituées par une unique plaque de couverture, de sorte que le déflecteur d'épanouissement présente l'aspect d'une boîte plate, dont le volume interne est subdivisé par des cloisons en canaux de passage cintrés et adjacents.

Si le groupe lanceur auquel est associé un tel déflecteur d'épanouissement est un groupe lanceur disposé latéralement sur l'épandeur, de sorte que les axes de ses rouleaux soient sensiblement parallèles ou faiblement inclinés sur la direction de déplacement de l'épandeur, afin que le groupe lanceur correspondant soit destiné en particulier à l'épandage latéral des produits granuleux, il est avantageux que toutes les surfaces de déflexion d'un même déflecteur d'épanouissement présentent leur concavité tournée d'une même côté qui est, de préférence, le côté opposé au sens de déplacement de l'épandeur.

Par contre, si le déflecteur d'épanouissement est combiné à un groupe lanceur disposé transversalement par rapport à la direction de déplacement de l'épandeur, c'est-à-dire de telle sorte que les axes de ses rouleaux soient sensiblement perpendiculaires ou fortement inclinés sur la direction de déplacement de l'épandeur, afin d'assurer, en particulier, un épandage des produits granduleux vers l'arrière et latéralement des deux côtés, il est avantageux que toutes les surfaces de déflexion d'un même déflecteur d'épanouissement forment un faisceau sensiblement en éventail.

Dans une autre variante de l'épandeur conforme à l'invention, les moyens de répartition comprennent, pour au moins un groupe lanceur, un faisceau de tubes de répartition, ayant des longueurs différentes, dont les parties d'extrémité amont sont adjacentes les unes aux autres, présentent leurs axes sensiblement dans le plan moyen de la nappe projetée de produits granuleux, selon son épaisseur, et parallèlement à la direction de déplacement de ladite nappe projetée, et divisent cette dernière en fractions contiguës de nappe qui sont chacune guidée par l'une des tubes jusqu'à son extrémité aval, décalée sensiblement dans la direction de déplacement de ladite nappe projetée, par rapport aux extrémités aval des autres tubes. Dans cette variante de l'épandeur selon l'invention, la répartition est donc assurée par un ensemble ou faisceau de tubes, d'un type déjà connu et utilisé dans les épandeurs à transport pneumatique de la matière à épandre. Si l'on souhaite épandre sur une zone localisée du sol chaque fraction de nappe canalisée dans l'un des tubes, il est alors avantageux d'équiper l'extrémité aval de chaque tube d'un déflecteur, déviant par exemple la fraction de nappe correspondante vers le sol et/ou vers l'arrière. Mais une répartition dispersée à l'aide de tels tubes est également possible si l'extrémité aval de chaque tube est équipée d'un éclateur, vers lequel est dirigée la fraction de nappe guidée dans le tube correspondant et sur lequel des produits granuleux de cette fraction de nappe rebondissent avant de retomber sur le sol. Pour permettre l'épandage selon des lignes localisées, il est également possible d'équiper l'extrémité aval des tubes d'un conduit souple dirigé vers le sol. Comme cela est également connu dans les ensembles de tubes de transport pneumatique pour épandeur, il est également possible que l'extrémité aval de chaque tube soit équipée d'un embout diviseur, divisant la fraction de nappe guidée dans le tube correspondant en deux parties dont chacune est répartie sur l'une de deux zones du sol qui sont décalées l'une par rapport à l'autre dans la direction de déplacement de la nappe projetée. Enfin, pour répartir également les produits granuleux sur la zone du sol au-dessus de laquelle la trémie et le ou les groupes lanceurs de l'épandeur sont déplacés, l'un au moins des tubes du faisceau, et en particulier celui disposé à l'extrémité arrière du faisceau par rapport au sens de déplacement de l'épandeur, est cintré sur au moins une partie de sa longueur, de façon à rapprocher son extrémité aval d'un plan vertical passant sensiblement par la base de la trémie de l'épandeur.

De plus, que les moyens de répartition soient constitués d'un déflecteur à surface de déflextion continue et cintrée, ou à faisceau de surface de déflexion cintrée, ou encore d'un faisceau de tubes de répartition, il est avantageux, pour tenir compte en particulier des caractéristiques physiques des produits granuleux, d'ajuster la largeur d'épandage en modifiant l'orientation des moyens de répartition, lorsque ces derniers sont, pour au moins un group lanceur, montés pivotants sur le châssis autour d'au moins un axe sensiblement parallèle aux axes des rouleaux délimitant la goulotte de projection correspondante.

Enfin, pour ce qui concerne les moyens de dosage, alimentant un ou plusieurs groupes lanceurs de l'épandeur à partir de la trémie, ils peuvent comprendre un dispositif de distribution volumétrique, comportant au moins un organe rotatif, entraîné en rotation dans une gouttière alimentée en produits granuleux par une ouverture à la base de la trémie, mais il est également possible que les moyens de dosage comprennent une vanne mobile et réglable en position vis-à-vis d'un bord d'une ouverture définie à la base de la trémie, entre ledit bord et une partie de la surface latérale externe de l'un des roulaux d'au moins un groupe lanceur correspondant, ledit rouleau faisant partiellement saillie dans la base de la trémie et assurant, par sa rotation, l'entraînement direct des produits granuleux vers le ou les groupes lanceurs correspondants. Avantageusement, dans la variante particulière d'épandeur selon l'invention, dans laquelle deux groupes lanceurs adjacents ont des moyens d'injection commun, il est plus avantageux que les moyens de dosage soient également communs aux deux groupes lanceurs.

Afin d'obtenir, avec un même épandeur, toutes les largeurs d'épandage souhaitées inférieures à une largeur maximum, en n'utilisant que la partie des moyens de répartition qui permet d'obtenir les trajectoires correspondantes, il est de plus avantageux que l'écoulement de la nappe de produits granuleux alimentant au moins un groupe lanceur à partir de la trémie soit limité entre deux volets latéraux, et que l'épandeur comprenne également au moins un obturateur qui, ainsi que l'un au moins des deux volets latéraux, soit mobile et réglable dans une direction sensiblement transversale à l'écoulement de la nappe d'alimentation, afin d'en définir la largeur et/ou la position par rapport aux rouleaux du ou des groupes lanceurs correspondants. Ceci revient à masquer une partie de la distribution pour n'alimenter en produits granuleux que la portion de la goulotte de projection coopérant avec la partie correspondante des moyens de répartition.

L'épandeur selon l'invention peut, comme déjà mentionné ci-dessus, comprendre un seul ou plusieurs groupes lanceurs, l'un au moins de ces groupes lanceurs étant tel que les axes de ces rouleaux sont sensiblement parallèles à la direction de déplacement de l'épandeur, et/ou l'un au moins de ces groupes lanceurs étant tel que les axes de ces rouleaux sont inclinés sur la direction de déplacement de l'épandeur et, en particulier, sensiblement perpendiculaires à cette direction de déplacement.

L'épandeur selon l'invention peut également assurer la répartition des produits granuleux par des vitesses de lancement différentes, auxquels cas les moyens de répartition peuvent être limités à des moyens de variation ou de changement de vitesse de rotation du rouleau ou consister en des caractéristiques particulières de structure ou de forme des rouleaux, permettant de donner aux produits granuleux des vitesses différentes. Eventuellement, des moyens de répartition à déflecteur peuvent être combinés à des moyens de répartition à vitesses de lancement différentes.

Dans une variante d'épandeur de ce type, il comporte plusieurs groupes de lancements adjacents, dont les premiers rouleaux sont de même rayon, disposés côte à côte et coaxiaux et dont les seconds rouleaux sont également de même rayon disposés côte à côte et coaxiaux, les rouleaux de l'un des deux ensembles de rouleaux adjacents ainsi définis étant des rouleaux moteurs, entraînés en rotation à des vitesses différentes d'un rouleau à l'autre, tandis que les rouleaux de l'autre ensemble sont montés chacun fou en rotation autour de son axe et entraînés chacun par contact et frottement à partir du rouleau moteur correspondant, les moyens de répartition des produits granuleux comprenant dans ce cas des moyens d'entraînement en rotation des rouleaux moteurs auxdites vitesses différentes, de sorte que des trajectoires de plus ou moins longues portées puissent être obtenues grâce à ces vitesses différentes.

Avantageusement dans ce cas, chacun des groupes lanceurs adjacents comprend une goulotte d'injection délimitée entre son premier rouleau et un troisième rouleau d'un ensemble de rouleaux de même rayon, disposés côte à côte et coaxiaux, et montés chacun fou en rotation autour de son axe.

Dans un exemple relativement simple de réalisation, les moyens d'entrainment en rotation des rouleaux moteurs comprennent un jeu de poulies de ranvoi étagées, de diamètre différent les unes des autres, indépendantes les unes des autres et solidaires chacune an rotation de l'un des arbres d'un jeu d'arbres de transmission tubulaires et coaxiaux, dont chacun est solidaire en rotation de l'un respactivemant des rouleaux moteurs, ainsi qu'une poulie d'entraînement étagée, solidaire en rotation d'un arbre d'entrainement et reliée à chacun des poulies de renvoi par une courroie d'entraînement.

Enfin, comme la trajectoire des produits granuleux est déterminée par la vitasse et la direction des produits granuleux à la sortie des moyens de projection et/ou de répartition, l'épandeur selon l'invention peut également comprendra, pour au moins un groupe lancaur, des moyens de variation et/ou de réglage de la vitesse de rotation d'au moins un rouleau du ou des groupes lanceurs correspondants, afin de modifier la largeur d'épandage an modifiant la vitasse tangantielle du ou des rouleaux et donc la vitesse donnée aux produits granuleux.

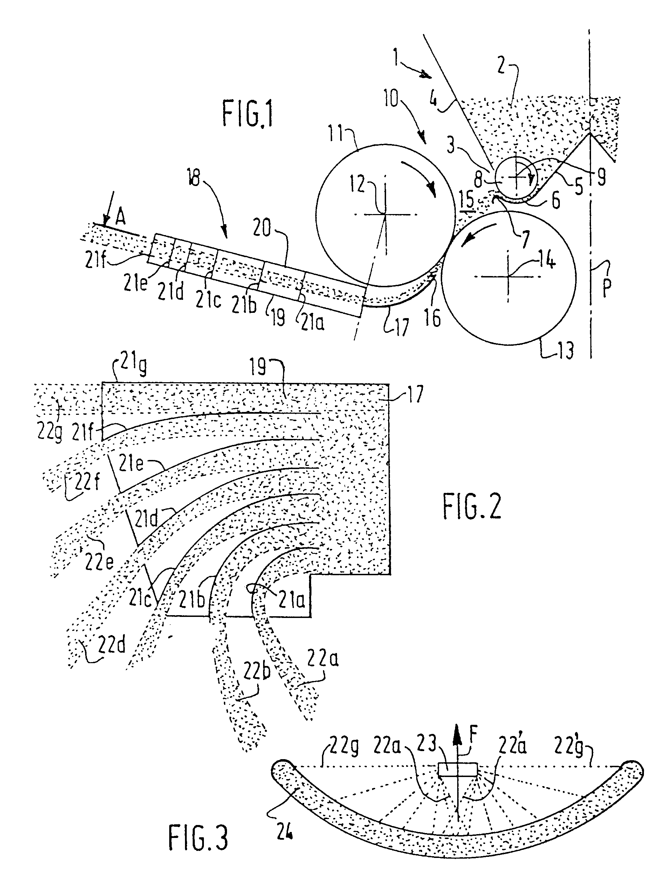

L'invention sera mieux comprise, et d'autres caractéristiques et avantages rassortiront plus clairement à la lecture de la description qui suit de plusieurs modes de réalisation (les figures 1, 5-8 ne représentent pas un mode de réalisation de l'invention telle que révendiquée), donnés à titre non limitatif, en référence aux dessins annexés sur lesquels:
Fig. 1 est une demi-vue an coupe transversale schématique d'un premier exemple d'épandeur équipé de deux groupes lanceurs latéraux, symétriques par rapport au plan longitudinal et médian de l'épandeur,
Fig. 2 est une vue schématique an coupe salon la plan A-A de la figure 1 du déflacteur d'épanouissement associé au groupe lanceur de l'épandeur représenté sur la figure 1,
Fig. 3 est une vue schématique en plan représentant l'épandeur et la zone de répartition au sol des produits granuleux épandus,
Fig. 4 est une vue schématique en plan d'une variante de représentation préférée du déflecteur de la figure 2,
Fig. 4a est une vue schématique en plan d'une variante désavantageuse du déflecteur de la figure 2, permettant de comprendre l'intérêt de la variante de la variante de la figure 4,
Fig. 5 est une demi-vue schématique en coupe transversale analogue à la figure 1, d'un second exemple d'épandeur à deux groupes lanceurs disposés latéralement et symétriquement par rapport au plan longitudinal et médian de l'épandeur,
Fig. 6 est une vue schématique en élévation latérale du groupe lanceur de l'épandeur de la figure 5,
Fig. 7 est une vue schématique en coupe tranversale d'un troisième exemple d'épandeur à deux groupes lanceurs latéraux et symétriques,
Fig. 8 est une vue schématique en plan de l'épandeur de la figure 7,
Fig. 9 est une vue analogue à la figure 1 pour un quatrième exemple d'épandeur à deux groupes lanceurs latéraux symétriques,
Fig. 10 est une vue analogue à la figure 2 du déflecteur d'épanouissement du groupe lanceur de l'épandeur de la figure 9,
Fig. 11 est une vue analogue à la figure 3 pour l'épandeur de la figure 9,
Fig. 12 est une vue analogue à la figure 5 pour un ciniquième exemple d'épandeur à deux groupes lanceurs symétriques et latéraux,
Fig. 13 est une coupe schématique selon XII-XII de l'épandeur de la figure 12,
Figs. 14 et 15 sont des vues respectivement analogues aux figures 12 et 13 pour un réglage différent de la largeur de la nappe de produits granuleux projetée,
Fig. 16 est une vue en perspective du déflecteur de l'épandeur des figures 12 à 15.
Fig. 17 est une vue analogue à la figure 7 d'un sixième exemple d'épandeur à deux groupes lanceurs latéraux et symétriques.
Fig. 18 est une vue schématique et en plan de l'épandeur de la figure 17.
Fig. 19 est une vue schématique en coupe transversale d'un septième exemple d'épandeur, à deux groupes lanceurs latéraux équipés d'un déflecteur d'épanouissement.
Fig. 20 est une vue analogue à la figure 19 d'un huitième exemple d'épandeur à deux groupes lanceurs latéraux équipés chacun d'un déflecteur dans le plan vertical.
Fig. 21 est une vue analogue aux figures 7 et 17 d'un neuvième exemple d'épandeur à deux groupes lanceurs latéraux.
Fig. 22 est une vue schématique en plan de l'épandeur de la figure 21.
Fig. 23 est une vue schématique en coupe longitudinale d'un dixième exemple d'épandeur, ayant un seul groupe lanceur disposé transversalement par rapport au sens de déplacement de l'épandeur.
Fig. 24 est vue en élévation de l'arrière de l'épandeur de la figure 23.
Fig. 25 est une vue schématique en plan de l'épandeur des figures 23 et 24.
Fig. 26 et 27 sont des vues schématiques respectivement en élévation de l'arrière et selon une coupe par l'axe AA' de la Fig. 26 d'une variante d'épandeur à répartition par vitesses de projection différentes.

L'épandeur représenté sur les figures 1 à 3 comprend une trémie de stockage 1, d'une capacité convenable pour assurer une autonomité suffisante à l'épandeur pendant la phase de travail dans un champ, et qui est montée sur un châssis porteur (non représenté) réalisé de manière convantionnalle comme tous les châssis des machines agricoles, et déplaçables derrière un engin tracteur. Ce châssis est équipé à l'avant d'un dispositif d'attelage de type bien connu dit "trois points" à ralevage hydraulique, compatible avec les dispositifs d'attalage des tracteurs agricoles, lorsque l'épandeur est destiné à être porté à l'arrière d'un tel tracteur. Par contre, si l'épandeur est destiné à être remorqué derrière un tractaur, le châssis porteur est équipé de roues de contact avec le sol, et, à l'avant, d'un dispositif d'attalage pour le remorquage. Dans les deux cas, un arbre de transmission, destiné à être accouplé à une prise de force du tracteur, est monté en rotation sur le châssis pour assurer l'entraînement en rotation des différents organes rotatifs de l'épandeur qui seront présentés ci-dessous.

La trémie 1 contient une charge 2 de produits granulaux, par exemple des engrais, qui s'écoule progressivement par chacune de deux ouvertures latérales 3 (dont une seule est visible sur la figure 1), ménagées symétriquement dans la base de la trémie 1, et chacune délimitée entre une paroi latérale 4 de la trémie qui est inclinée vers la plan P vertical, longitudinal et de symétrie de la trémie 1 et de l'épandeur, et un flanc inline d'un fond 5 dont la section transversale est en forme de V renversé et dont la pointe est dans le plan P. Chaque flan incliné du fond 5 se termine, à la base de la tremie 1, par une partie arrondie et légèrement relevée en forme de gouttière 6, qui borde l'ouverture latérale 3 et se prolonge vers l'extérieur et vers le bas par une petite bavette 7. Dans chacune des deux gouttières latérales 6 ainsi formées (dont une seule est visible sur la figure 1), un cylindre de distribution volumétrique 8 est entraîné en rotation autour d'un axe longitudinal et horizontal 9 et ce cylindre 8 délimite avec la gouttière 6 un canal de distribution des engrais. L'ensemble de ces éléments constitue un dispositif doseur et de distribution volumétrique, assurant l'alimentation en produits granuleux d'un groupe lanceur 10 décrit ci-dessous. Par dispositif de distribution volumétrique, il faut entendre un dispositif de distribution assurant une alimentation des produits distribués indépendamment des qualités physiques de ce produit. A cet effet, le cylindre distributeur 8 peut être équipé de pales radiales. Le cylindre de distribution 8 est positivement entraîné en rotation, à partir de la transmission montée sur le châssis, dans un sens de rotation tel qu'il entraîne dans le canal de distribution correspondant des engrais qui s'écoulent par l'ouverture 3, selon un débit régulier, et en une nappe d'engrais tombant par gravité au-delà de la bavette 7, vers le groupe lanceur 10.

Ce groupe lanceur 10 comprend un premier rouleau cylindrique 11 entraîné positivement en rotation, dans le même sens que le cylindre distributeur 8, autour de son axe 12, qui est fixé sur le châssis et parallèle à l'axe 9, ainsi qu'un second rouleau cylindrique 13 monté fou en rotation sur le châssis autour de son axe 14, qui est parallèle aux axes 12 et 9, et fixe, à un niveau inférieur à celui de l'axe 12, lui-même en dessous du niveau de l'axe 9, l'axe 14 étant de plus à l'intérieur de l'axe 12 par rapport au plan P, mais très légèrement à l'extérieur de l'axe 9. De plus, l'axe 14 est positionné pour que les deux rouleaux 11 et 13 soient très sensiblement tangents extérieurement l'un à l'autre. La surface latérale externe des rouleaux 11 et 13 est garnie d'un revêtement périphérique en un caoutchouc plein d'une dureté de 40 Shore, et présentant donc des propriétés de déformation élastique aux contacts sous pression avec les grains d'engrais. Les rouleaux 11 et 13 sont montés en rotation sur des arbres (non représentés) dont les deux extrémités sont reçues dans des paliers (également non représentés) supportés par le châssis. Les deux rouleaux 11 et 13 sont sensiblement de même diamètre, et ils délimitent entre eux une goulotte de projection dont l'entrée 15, de section de passage progressivement décroissant, est tournée vers le dispositif de dosage et de distribution volumétrique à la base de la trémie 1, alors que la sortie 16 de la goulotte, de section de passage progressivement croissante, est dirigée vers le base et vers l'extérieur, par rapport au plan P. La nappe d'engrais distribuée par la gouttière 6 et le cylindre distributeur 8 tombe par gravité dans l'entrée 15 de la goulotte, et les positions relatives des axes 9, 12 et 14 sont choisies de telle sorte que le plan moyen de cette nappe d'engrais, selon son épaisseur, soit sensiblement confondu, lorsque cette nappe entre dans l'entrée 15, avec le plan tangent commun aux deux rouleaux 11 et 13. Cette nappe d'engrais est alors prise en charge par le rouleau menant 11 qui l'entraîne vers la sortie 16 et le mouvement de la masse d'engrais est transmis par frottement aux rouleaux inférieurs 13, qui est ainsi entraîné en rotation autour de son axe 14, dans le sens contraire au sens de rotation du rouleau menant 11. La nappe d'engrais est ainsi pincée entre les deux rouleaux 11 et 13, au niveau de la génératrice de contact de ces derniers, et, compte-tenu de la grande vitesse de rotation du rouleau menant 11, entraîné à partir de la transmission portée par le châssis, ce rouleau 11 transfère à la nappe d'engrais passant dans la goulotte une vitesse linéaire suffisante pour qu'à la sortie 16 de la goulotte, alors que la nappe d'engrais est libérée de l'emprise des rouleaux 11 et 13, son énergie cinétique soit telle que les engrais sont projetés en une nappe mince dont le plan moyen, selon son épaisseur est confondu avec le plan tangent commun aux deux rouleaux 11 et 13. Ces derniers constituent ainsi un dispositif de mise en vitesse et de projection forcée d'une nappe d'engrais qui, à sa sortie 16 de la goulotte de projection, est reçue et déviée par une glissière fixe 17. Cette glissière 17, fixée sur le châssis est une pièce de tôle cintrée présentant sa concavité tournée vers l'axe 12 du rouleau supérieur 11, et le bord amont de la glissière 17, sensiblement parallèle à la génératrice de contact entre les deux rouleaux 11 et 13, est contenue dans un plan parallèle au plan tangent commun aux deux rouleaux mais décalée légèrement vers l'axe 14 du rouleau 13, afin que la nappe projetée puisse, dans la sortie 16 de la goulotte être reçue tangentiellement sur la glissère 17 et déviée par cette dernière progressivement et sans rebond des engrais, donc sans éclatement de la nappe jusqu'au bord aval de la glissière 17, au niveau duquel le plan tangent à cette dernière est un plan parallèle aux axes 12 et 14 des rouleaux et incliné vers l'extérieur et vers le haut, selon un angle de site favorable à l'obtention de la plus grande portée. Par son bord aval, la glissière 17 est directement adjacente à un déflecteur 18 d'épanouissement de la nappe projetée latéralement et vers l'arrière, de façon à assurer une répartition dite "horizontale" des engrais projetés. Comme représenté sur les figures 1 et 2, ce déflecteur d'épanouissement 18 a sensiblement la forme d'une boîte plate constituée d'une plaque de base 19 et d'une plaque de couverture 20, ayant une même forme sensiblement trapézoïdale et parallèles l'une à l'autre ainsi qu'au plan tangent à la glissière 17 au niveau de son bord aval, et de part et d'autre de ce plan tangent. Les deux plaques 19 et 20 sont maintenues fixement écartées l'une de l'autre par un faisceau de cloison 21a à 21g qui sont des plaques de tôle perpendiculaires aux plaques 19 et 20. La cloison 21g, vers l'avant de l'épandeur, est une cloison plane fermant la boîte du déflecteur 18 vers l'avant et sensiblement perpendiculaire aux axes 12 et 14 des rouleaux 11 et 13. A l'exception de cette cloison 21g, toutes les autres cloisons 21a à 21f sont des cloisons cintrées présentant leur concavité tournée vers l'arrière de l'épandeur, sur lequel les rouleaux 11 et 13 sont montés de sorte que leurs axes 12 et 14 soient sensiblement parallèles à la direction de déplacement de l'épandeur. De plus, les rayons de coubures moyens des cloisons cintrées augmentent progressivement de la cloison 21a à cloison 21f: on obtient ainsi que le déflecteur d'épanouissement 18 est subdivisé entre les deux plaques 19 et 20, en canaux de passage adjacents et cintrés, sensiblement divergents chacun de son entré, directement adjacente au bord aval de la glissière 17, à sa sortie décalée latéralement et/ou vers l'arrière. De plus, la forme des cloisons 21a à 21g du faisceau est telle que les angles formés entre la direction des axes 12 et 14 des deux rouleaux et les plans tangents aux cloisons 21a à 21g au niveau de leurs bords avals sont des angles qui diminuent progressivement de 90°, pour la cloison 21g à une valeur négative d'environ 20° pour la cloison 21a. On obtient ainsi que la nappe projetée et continue d'engrais qui est déviée par la glissère 17 jusqu'à l'entrée du déflecteur 18 est subdivisée, par les bords amonts des cloisons 21a à 21f en fractions contiguës de nappe dont chacune est ainsi reçue, confinée, guidée et déviée dans l'un des canaux cintrés du déflecteur 18, et chacune de ces fractions de nappe 22a à 22g sort latéralement et/ou vers l'arrière du déflecteur 18 en suivant une trajectoire contenue dans le plan tangent à la cloison qui l'a déviée, au niveau du bord aval de cette dernière, sauf pour la fraction de nappe 22g qui n'est pas déviée par la cloison 21g et poursuit librement sa trajectoire perpendiculairement aux axes 12 et 14 des rouleaux. On obtient ainsi que l'unique nappe projetée est subdivisée en fractions contiguës dont certaines, les fractions 22d à 22g, assurent une répartition latérale des engrais, tandis que d'autres, 22b et 22c, assurent une répartition vers l'arrière et qu'enfin la fraction 22a, et dans une mesure moindre, la fraction 22b, permettent également de répartir des engrais sur la bande de terrain au-dessus de laquelle sont déplacés le tracteur et la trémie et les groupes lanceurs de l'épandeur. Il en résulte une répartition des engrais telle que représentée en plan sur la figure 3, sur laquelle l'épandeur avec ses deux groupes lanceurs latéraux, tels que 10, combinés chacun à sa glissière telle que 17 et à son déflecteur d'épanouissement tel que 18, est désigné dans son ensemble par la référence 23, et se déplace dans le sens de la flèche F. A l'arrêt, la zone ou sol sur laquelle les engrais sont répartis est une zone 24 en forme de boudin cintré qui est délimitée latéralement par les fractions de nappe transversale 22g et 22ʹg non déviées par les déflecteurs, et, vers l'arrière, par les fractions de nappe 22a et 22ʹa les plus déviées, qui se rapprochent vers l'arrière du plan médian longitudinal P au point de se croiser sensiblement dans ce plan P. Le déplacement de l'épandeur 23 permet donc de couvrir une surface de terrain sur une largeur d'épandage continue, avec une densité de répartition d'engrais qui peut être rendue uniforme sur la largeur d'épandage, ou, contraire, suivre une variation prédéterminée selon cette largeur et éventuellement, être regroupée sur plusieurs bandes de terrain non adjacentes, séparées les unes des autres par des bandes sur lesquelles aucun engrais n'est réparti, grâce au choix du nombre des cloisons de déflection 21, du profil de leur surface de déflexion concave, qui dévie une fraction de nappe correspondante, et donc des angles des tangentes à ces cloissons au niveau de leur bord aval.

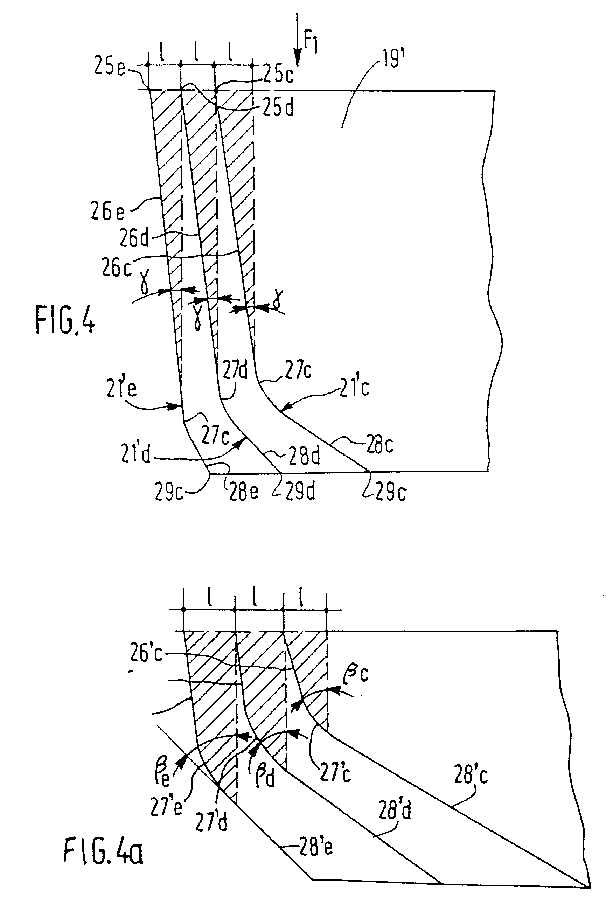

Dans l'exemple de déflecteur d'épanouissement représenté sur la figure 2, chacune des cloisons 21a à 21f présente une petite portion amont qui est plane et perpendiculaire aux axes 12 et 14 et au plan moyen de la nappe projetée, aux passages du bord aval de la glissière 17, et à cette petite portion amont fait suite une portion plus ou moins cintrée qui s'étend jusqu'au bord aval de la cloison correspondante. Cette réalisation, bien que satisfaisante, n'est pas la plus favorable et peut être avantageusement remplacée par celle représentée schématiquement en plan sur la figure 4.

En effet, on admet comme principe que, pour qu'un déflecteur soit insensible aux variations de granulométrie, de forme des grains et de débit d'un produit granuleux projecté, il faut que les surfaces qui définissent les différentes directions souhaitées soient abordées par le produit projeté sous un angle très faible, afin d'éviter des chocs et donc des rebonds incontrôlables.

Sur la figure 4, on a représenté en 19ʹ la plaque de base du déflecteur sur laquelle sont fixées les cloisons de déflection, dont trois seulement ont été représentées en 21ʹc, 21ʹd et 21ʹe. Les bords amonts tels que 25c à 25e des cloisons sont régulièrement espacés les uns des autres sur le largeur de la nappe projetée quittant la glissière 17 en se déplaçant dans le sens de la flèche F₁, de sorte que cette nappe projetée d'engrais est divisée en fractions de nappe contiguës ayant chacune la même largeur l, égale au rapport de la largeur totale de la nappe non divisée au nombre d'intervalles formés entre les bords amonts des cloisons. Chaque cloison comporte une portion amont telle que 26c à 26e, qui est plane et légèrement inclinée sur la direction de la flèche F₁ (direction du vecteur vitesse de la nappe projectée) d'un angle γ très faible, de l'ordre de 5°, et cette portion amont plane et faiblement inclinée est suffisamment longue pour que la fraction de bande de largeur l correspondante soit venue sur toute sa largeur en contact avec cette portion amont 26c à 26e, avant le raccord de cette dernière à une portion centrale cintrée 27c à 27e, assurant la déviation souhaitée de la fraction de nappe correspondante, et à laquelle fait suite une portion avale, également plane, telle que 28c à 28e, dans le plan de laquelle la fraction de nappe correspondante poursuit librement sa trajectoire au-delà du bord aval correspondant, tel que 29c à 29e.

Donc, pour chaque direction de répartition désirée pour une fraction de nappe d'engrais, la modification de l'orientation de la fraction de nappe ne débute que lorsque cette fraction de nappe a été mise en contact sur toute sa largeur l avec une partie amont de cloison telle que 26c à 26e, faisant un angle très faible avec la direction de la nappe quittant la glissière 17 et projetée hors des rouleaux. Les cloisons de déflection représentées sur la figure 4 permettent donc l'application du principe de mise en contact sans rebond d'une nappe projetée de produits granuleux avec la ou les surfaces de déflection, dans un déflecteur d'épanouissement de la nappe dans un plan "horizontal".

Si les cloisons de déflexion avaient présenté les formes représentées sur la figure 4a, avec une courte portion amont plane, telle que 26ʹc à 26ʹe, suivie de la portion centrale cintrée telle que 27ʹc à 27ʹe, elle même prolongée d'une longue portion aval plane telle que 28ʹc à 28ʹe, la déviation de chaque fraction de nappe de largeur l aurait été amorçée plus tôt, mais une partie de chaque fraction de nappe aurait abordé la surface de déflection correspondante, dans sa portion cintrée telle q ue 27ʹc à 27ʹe ou même au début de sa portion aval tel que 28ʹc à 28ʹe, sous un angle β_{c} à βₑ très important, provoquant des rebonds incontrôlables selon les débits et les caractéristiques du produit granuleux.

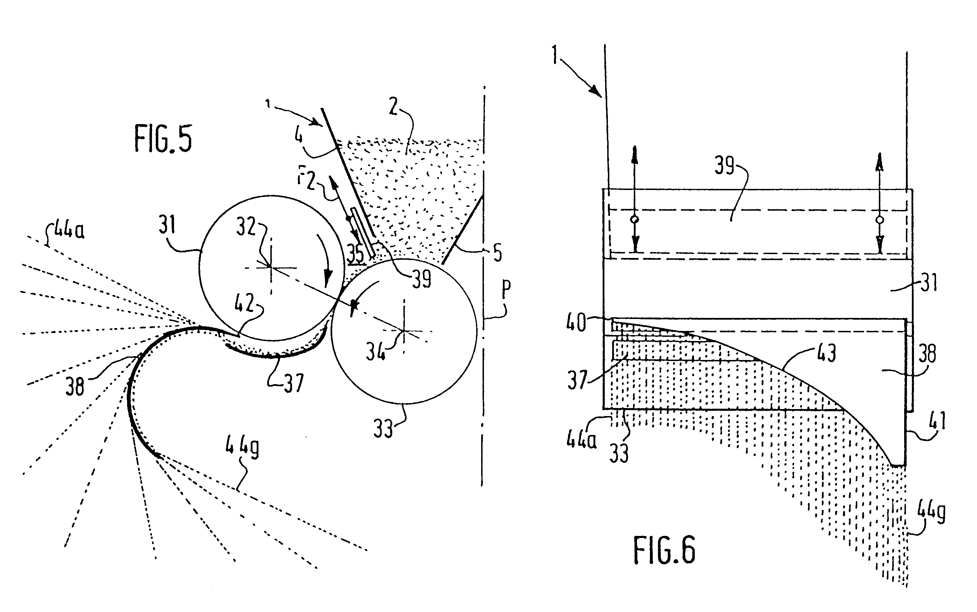

Le second exemple d'épandeur, représenté partiellement sur les figures 5 et 6 est également un épandeur à deux groupes lanceurs latéraux, d'axe parallèle à la direction de déplacement de l'épandeur et symétriquement disposé par rapport au plan longitudinal et médian P de l'épandeur.

Dans ce second exemple, chaque groupe lanceur 30, qui est constitué de deux rouleaux extérieurement tangents l'un à l'autre 31 et 33, montés en rotation sur le châssis respectivement autour de leurs axes fixes 32 et 34, en délimitant entre eux une goulotte de projection, et coopérant avec une glissière 37, présente sensiblement les mêmes composants ayant les mêmes positions relatives et fonctionnant de la même façon que dans le groupe lanceur 10 de l'épandeur des figures 1 à 3, de sorte qu'il n'est pas nécessaire de le décrire à nouveau en détail. Ce second exemple d'épandeur se distingue essentiellement du premier par la structure du dispositif de dosage de l'alimentation de l'entrée 35 de la goulotte de projection en produits granuleux à partir de la trémie 1, et par la structure du dispositf de répartition, monté en aval de la glissière 37.

Dans ce second exemple d'épandeur, le dispositif de dosage comprend une vanne 39 en forme de plaque rectangulaire, montée coulissante par ses petits côtés dans deux rails (non représentés) fixés sur la partie inférieure de la face extérieure de la paroi latérale 4 de la trémie 1, la vanne 39 ayant ses grands côtés parallèles au bord inférieur de cette paroi 4 et étant réglable en position par rapport à ce bord de cette paroi 4, de manière à délimiter une ouverture latérale et rectangulaire d'alimentation en produits granuleux 2 de l'entrée 35 de la goulotte de projection, à partir de la base de la trémie 1, cette ouverture rectangulaire étant délimitée entre le bord inférieur de la vanne 39 et la partie en regard de la surface latérale externe du rouleau 33, dont la partie supérieure fait saillie dans la trémie 1, entre la paroi latérale 4 et le fond 5 de cette dernière. Dans cet exemple, le rouleau positivement entraîné à partir de la transmission montée sur le châssis est le rouleau inférieur et interne 33, comme cela peut également être le cas dans le premier exemple, et on assure ainsi, dans ce second exemple, un entraînement direct des produits granuleux 2 par la rotation du rouleau 33, au travers de l'ouverture délimitée entre ce rouleau et la vanne 39, et donc en quantité dosée en fonction de la position cette vanne par rapport à la paroi 4 de la trémie 1. Le débit d'alimentation de la goulotte de projection est donc proportionnel, pour une dimension axiale donnée du dispositif, d'une part à la distance séparant le rouleau 33 de la vanne 39, réglable en position dans les deux sens de la double flèche F₂ de la figure 5 et, d'autre part, à la vitesse de rotation du rouleau d'entraînement 33.

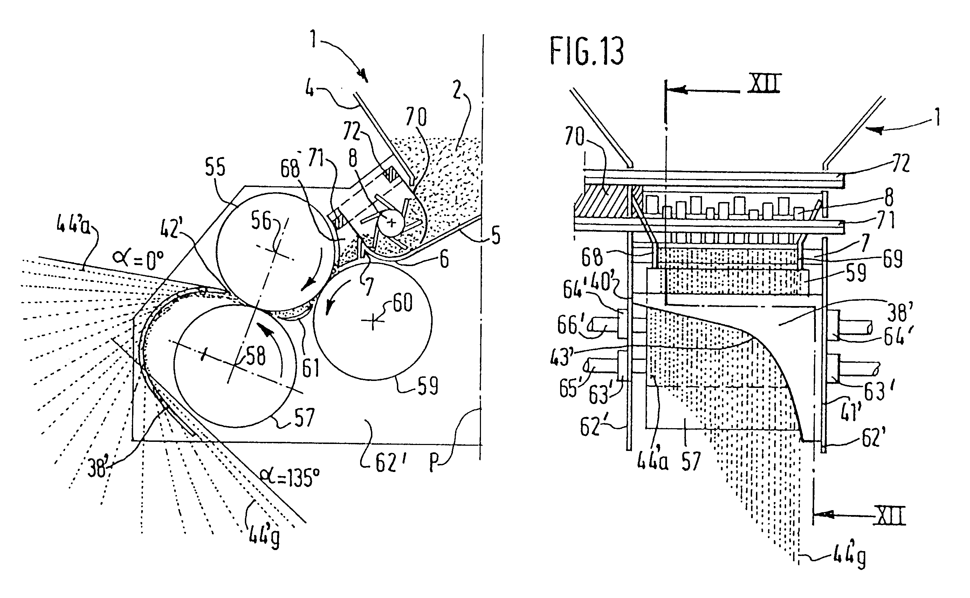

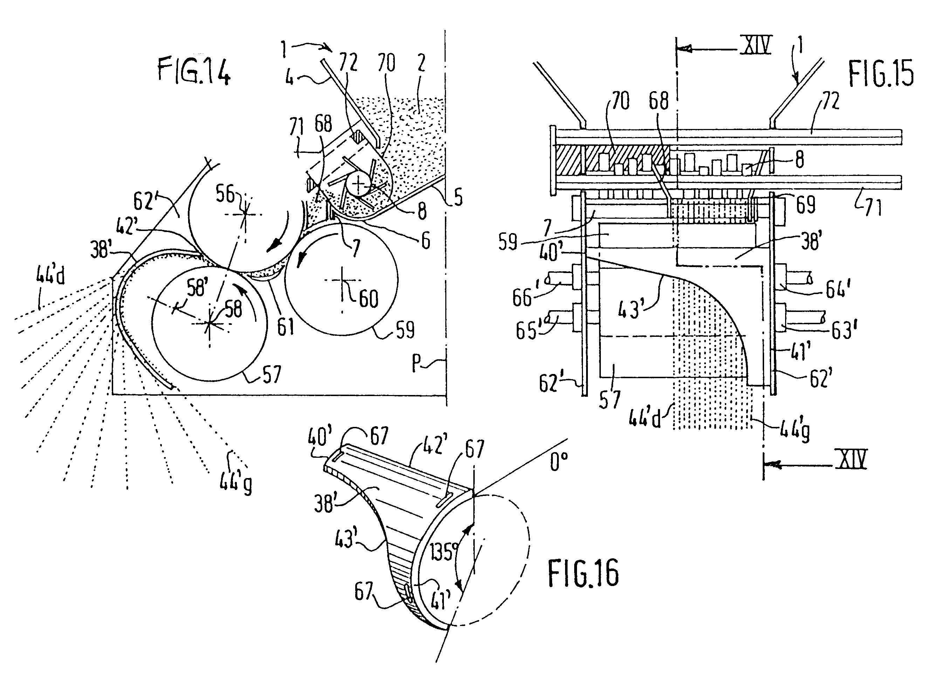

L'autre différence essentielle de ce second exemple par rapport au premier concerne le dispositif de répartition qui, dans ce cas, est un déflecteur 38 assurant un épanouissement dans le plan "vertical" de la nappe d'engrais projetée et déviée par la glissière 37. Ce déflecteur 38, sensiblement du type de celuie représenté sur la figure 16 et décrit ci-dessous de manière plus détaillée en référence à l'exemple de réalisation des figures 12 à 16, est une pièce de tôle cintrée, fixée au châssis et dont la concavité est tournée vers le base et vers le plan P de l'épandeur. La surface de déflexion de ce déflecteur 38 est sa face concave, qui est continue et cintrée sensiblement en arc de cercle dans un plan perpendiculaire aux axes 32 et 34, et cette surface de déflexion est délimitée entre quatre bords, dont le bord amont est sensiblement parallèle au bord aval de la glissière 37, donc également aux axes 32 et 34 et situé dans un plan parallèle au plan moyen de la nappe projetée quittant le bord aval de la glissière 37, mais légèrement décalée du côté de l'axe 32 du rouleau 31, afin que la nappe projetée soit reçue, dans toute son épaisseur, sur la surface de déflexion et aborde celle-ci sensiblement tangentiellement. Ceci permet la mise en oeuvre du principe présenté ci-dessus, et relatif à l'insensibilité d'un déflecteur aux variations de granulométrie de forme des grains et de débit du produit granuleux projeté et à l'absence de chocs et donc de rebonds incontrôlables, lorsque les produits granuleux de la nappe abordent la surface de déflexion. Le bord aval du déflecteur 38 est découpé en biais ses deux bords latéraux, et de telle sorte que l'angle formé entre la direction de la nappe projetée et déviée, à la sortie de la glissière 37, et la tangente, dans un plan perpendiculaire aux axes 32 et 34, à la surface de déflection et passant par un point de la découpe du bord aval en biais de celle-ci soit un angle qui augmente d'une valeur pratiquement nulle, au niveau d'un bord latéral 40 du déflecteur 38 qui est forcément un petit bord arqué, jusqu'à une valeur maximale nettement supérieure à 90°, au niveau de l'autre bord latéral 41, qui est un grand bord arqué du déflecteur 38, de sorte que la nappe projetée et continue passant au-delà du bord aval de la glissière 37 est divisé en fractions de nappe adjacentes dont celle à l'extrémité de la nappe longeant le petit côté latérale 40 n'est que très peu sinon pas du tout déviée, comme indiqué en 44a sur les figures 5 et 6, tandis que la fraction de nappe de l'autre extrémité, déviée sans éclatement par le déflecteur 38, le long de son bord latéral 41 le plus grand, est déviée au maximum et d'un angle tel que sa trajectoire, au delà du bord aval 43 du déflecteur 38, est dirigée vers le bas et vers le plan médian P de l'appareil. Entre les fractions de nappe d'extrémité 44a à 44g, les fractions de nappe sont progressivement et de manière continue déviées d'un angle qui augmente au fur et à mesure que l'on se déplace le long de la découpe du bord aval 43 du bord latéral 40 vers le bord latéral 41. Le déflecteur 38 permet donc la projection et la répartition des engrais jusque sous la machine, et le profil de découpe de son bord aval 43 peut être adapté à la répartition au sol avec une densité d'épandage désirée. Afin que l'ensemble de la nappe projetée sortant de la glissière 37 soit prise en charge par le déflecteur 38, il est de plus souhaitable que le bord amont 42 du déflecteur 38 soit situé sensiblement dans le plan radial passant par le bord aval de la glissière 37. Il est à noter que le déflecteur 38 d'épanouissement dans un plan vertical est de structure plus simple que le déflecteur 18 d'épanouissement dans un plan "horizontal" de l'exemple précédent, du fait qu'il ne présente qu'une seule surface de déflexion. Cependant, le déflecteur 38 ne sera avantageusement utilisé que pour l'épandage des produits granuleux sur des champs dans lesquels les plantations ne seront pas encore levées. En effet, l'épandeur 38 donne un certain nombre de trajectoires rasantes qui risquent d'occasionner des chocs très importants des engrais sur la végétation, de sorte que si celle-ci est déjà levée, il est préférable d'utiliser dans des secteurs d'épanouissement dans un plan "horizontal", tel que le déflecteur 18 de l'exemple précédent.

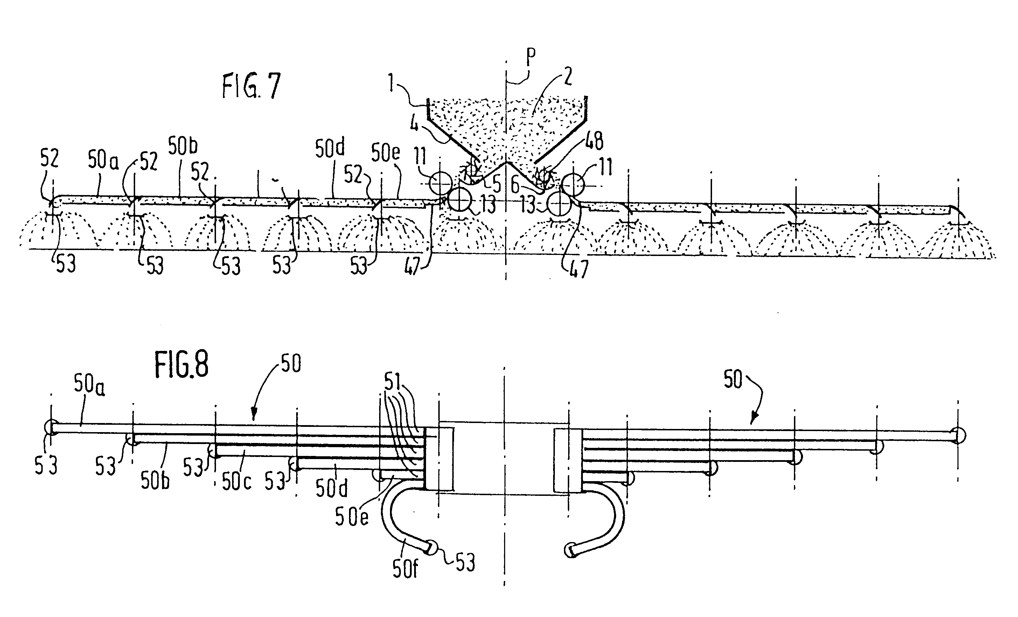

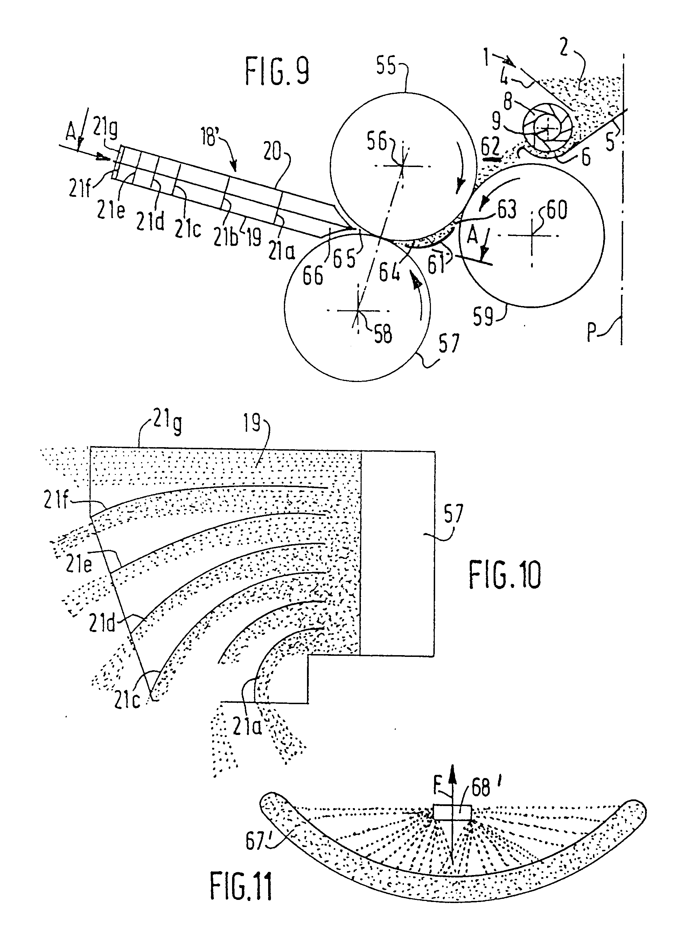

Sur les figures 7 et 8, on a schématiquement représenté un troisième exemple d'épandeur à deux groupes lanceurs latéraux, disposés symétriquement de part et d'autre du plan médian longitudinal P de la machine et dont chacun ne comprend que deux rouleaux d'axe sensiblement parallèle à la direction de la machine. Pour ce groupe lanceur, on retrouve ainsi le rouleau supérieur et externe 11 et le rouleau inférieur et interne 13 déjà décrit dans le premier exemple, occupant les mêmes positions relative l'un par rapport à l'autre et coopérant de la même manière afin de délimiter entre eux une goulotte de projectin, celle-ci étant alimentée en produits granuleux 2 à partir de la trémie 1 par un dispositif doseur qui est un dispositif de distribution volumétrique équivalent à celui décrit en référence à la figure 1, c'est-à-dire comportant un cylindre à palette 48 entraîné en rotation dans une gouttière de sortie latérale de la trémie 1 et délimitée entre un partie arrondie vers le haut 6 prolongeant le fond 5 de la trémie 1 et le bord inférieur de la paroi latérale 4 de cette trémie. Ce troisième exemple d'épandeur ne se distingue donc du premier que par la structure du dispositif de répartition qui comprend, pour chaque groupe lanceur, un faisceau 50 de tubes de répartition, qui sont des tubes analogues à ceux utilisés pour assurer le transport de la matière à épandre dans les épandeurs pneumatiques. Dans cet exemple, chaque faisceau comprend six tubes de longueurs différentes, dont cinq d'entre eux, les tubes 50a à 50e, de longueurs progresivement décroissantes, sont des tubes rectilignes montés côte à côte tandis que le sixième tube, le tube 50f, du côté de l'arrière de l'épandeur, est un tube cintré dans un plan horizontal et vers l'arrière, de sorte que son extrémité aval soit sensiblement dans le plan vertical passant par l'axe du rouleau supérieur et extérieur 11 du groupe lanceur correspondant. Les extrémités amont 51 des six tubes de chaque faisceau 50 sont directement adjacentes les unes aux autres de sorte que les axes des portions amont des tubes soient dans un même plan, qui est celui du plan moyen de la nappe projetée et sortant d'une glissière 47 qui guide cette dernière de la sortie de la goulotte de projection correspondante à l'entrée du faisceau de tube. De plus les axes des portions d'amont 51 des tubes sont perpendiculaires aux axes des rouleaus 11 et 13 et donc parallèles à la direction de déplacement de la nappe projetée et déviée par la glissière 47, de sorte que ces portions d'extrémité amont 51 des tubes divisent cette nappe en fractions de nappe contiguës dont chacune est guidée par l'un des tubes jusqu'à son extrémité aval. Du fait des différences de longueurs des tubes 50a à 50e et de la forme cintrée du tube 50f, les extrémités aval des tubes sont réparties sensiblement régulièrement dans une dirctin transversale par rapport aux déplacements de l'épandeur. A son extrémité aval, chacun des tubes de chaque faisceau est équipé d'un petit déflecteur 52 qui dévie la fraction de nappe guidée et transportée par le tube correspondant vers les bas et, éventuellement, simultanément ou en variante, vers l'arrière, en direction d'un éclateur 53, en forme de disque de tôle bombé suspendu de manière fixe sous le déflecteur 52 correspondant, de sorte que la fraction de nappe correspondante soit déviée par le déflecteur 52 et dirigée par ce dernier sur l'éclateur 53 correspondant, sur lequel la fraction de nappe correspondante est projetée et éclate, par rebonds des produits granuleux, retombent en une gerbe sur le sol, autour de l'éclateur 53. Cet exemple de réalisation garantit avec précision l'obtention d'une largeur d'épandage, mais cette dernière est sensiblement réduite par rapport à celle que l'on peut obtenir avec le premier exemple d'épandeur (voir figures 1 à 4), en raison de la dissipation d'énergie par frottement dans les tubes de transport.

Les trois exemples d'épandeurs décrits ci-dessus sont plus particulièrement destinés à l'épandage de produits devant être répartis avec une faible densité d'épandage, et sur des largeurs d'épandage relativement limitées, en raison respectivement de la limitation naturelle du débit de produit pris en charge entre les deux rouleaux du groupe lanceur, directement alimentés à partir de la trémie, et de la présence d'une glissière 17, 37 ou 47 en sortie de la gouttière de projection pour donner à la nappe projetée une direction de déplacement favorable à sa prise en charge par les dispositifs de répartition dont les épandeurs sont équipés.

Si l'on veut s'affranchir de ces deux limitations, pour assurer l'épandage de débits plus importants de produit sur des largeurs d'épandage plus grandes, il est préférable d'utiliser l'un des trois exemples d'épandeur décrit ci-dessous.

L'épandeur schématiquement représenté sur les figures 9 à 11 est également un épandeur à deux groupes lanceurs latéraux disposés symétriquement de part et d'autre du plan médian vertical P de l'appareil, et chaque groupe lanceur coopère avec un dispositif de répartition qui est un déflecteur d'épanouissement dans le plan "horizontal" pratiquement identique au déflecteur 18 du premier exemple (voir figures 1 et 2). De plus, chaque groupe lanceur est alimenté depuis la trémie 1 par un dispositif de dosage à distribution volumétrique sensiblement identique à celui du premier exemple, c'est-à-dire comprenant un cylindre rotatif à palette 8 entraîné en rotation autour de son axe 9, parallèle à la direction de déplacement de l'épandeur et disposé dans la gouttière délimitée entre le bord inférieur de la paroi latérale 4 de la trémie 1 et la partie recourbée vers le haut 6 à l'extrémité inférieure du fond 5. Cet exemple d'épandeur ne se distingue donc du premier exemple que par la réalisation de chaque groupe lanceur.

Celui-ci comprend trois rouleaux, dont un premier rouleau 55, en position supérieure, est simultanément tangent extérieurement à un second rouleau 57, en position inférieure et décalée légèrement vers l'extérieur du premier rouleau 55 par rapport au plan P, et à un troisième rouleau 59, décalé vers l'intérieur du premier rouleau 55 par rapport au plan P et à un niveau intermédiaire entre le premier rouleau 55 et le second rouleau 57, ces trois rouleaux étant chacun montés en rotation respectivement autour de leur axe 56, 58 et 60, qui sont tous trois parallèles à l'axe 9 du cylindre distributeur 8 et à la direction de déplacement de l'appareil.

Dans cet exemple, et de façon économique, seul le premier rouleau 55 est positivement entraîné en rotation à partir de la transmission portée par le châssis, mais en variante, il est possible que les deux rouleaux 57 et 59 soient simultanément entraînés positivement en rotation, le premier rouleau 55 étant alors monté fou en rotation autour de son axe. Les positions relatives des axes 56, 58, 60 des trois rouleaux et du dispositif de dosage sont choisis pour que, d'une part, le plan tangent commun aux deux rouleaux 55 et 57 soit perpendiculaire au plan tangent commun aux deux rouleaux 55 et 59,et que,d'autre part, les produits granuleux distribués par le dispositif de dosage 8 tombent par gravité dans l'entrée de la goulotte délimitée entre les deux rouleaux 55 et 59 en une nappe continue dont le plan moyen, selon son épaisseur,est pratiquement confondu avec le plan tangent commun à ces deux rouleaux 55 et 59.En d'autres termes, le vecteur vitesse du flux d'alimentation de la goulotte entre les rouleaux 55 et 59 est dans le plan tangent commun à ces deux rouleaux et dans une direction perpendiculaire à leurs axes. Les produits granuleux tombant dans l'entrée 62 de la goulotte entre les rouleaux 55 et 59 sont ainsi mis en vitesse par la coopération de ces deux rouleaux tournant à grande vitesse et sont projetés en une nappe à la sortie 63 de cette goulotte où cette nappe mise en vitesse est prise en charge sans éclatement, en abordant tangentiellement le bord amont d'une glissière 61 cintrée,à concavité tournée vers l'axe 56 du premier rouleau 55, et dont le bord aval est sensiblement parallèle au plan tangent commun aus deux rouleaux 55 et 57, mais légèrement décalé par rapport à ce plan tangent du côté de l'axe 58 du rouleau 57. De la sorte, la nappe de produits granuleux mis en vitesse entre les rouleaux 55 et 59, est injectée par la glissière 61 dans l'entrée 64 de la goulotte délimitée entre les rouleaux 55 et 57, et la nappe ainsi projetée hors de la sortie 65 de cette dernière goulotte est directement prise en charge par le déflecteur d'épanouissement 18ʹ.La position fixe des rouleaux 55 et 57 détermine l'angle de la trajectoire de portée maximum: cet angle est l'angle formé par le plan tangent commun à ces deux rouleaux et la direction horizontale. Le rouleau 59 constitue donc un rouleau d'injection, coopérant avec le premier rouleau 55 pour délimiter une goulotte d'injection, dont l'orientation est extrêmement favorable à une bonne alimentation par le dispositif de dosage, le dispositif d'injection ainsi constitué comportant également la glissière d'injection 61 et le premier rouleau 55 qui, simultanément, est un rouleau de projection coopérant avec le second rouleau 57 pour délimiter la goulotte de projection, dont l'orientation est également très favorable à l'obtention de trajectoires assurant une grande largeur d'épandage. La couverture totale de cette largeur d'épandage, avec une densité de répartition égale aux variables des produits granuleux du point le plus éloigné jusqu'au plan P de la machine, est obtenu par l'interposition du déflecteur d'épanouissement 18ʹ dans la trajectoire de la nappe projetée à la sortie 65 de la goulotte de projection. Afin de favoriser la division de cette nappe projetée en fractions contiguës, dont chacune est déviée dans l'un des canaux cintrés adjacents du déflecteur 18ʹ, et pour éviter des pertes de produits sur les côtés du déflecteur 18ʹ, entre ce dernier et les deux rouleaux 55 et 57, il est avantageux que les extrémités amonts des cloisons de déflection 21a à 21g soient découpées en triangles présentant un sommet engagés dans la sortie 65 de la goulotte de projection.

Sur la figure 11, on a représenté schématiquement la zone 67ʹ, en forme de boudin cintré,sur laquelle les produits granuleux sont répartis depuis l'épandeur, représenté dans son ensemble par la référence 68ʹ, et de sorte que le déplacement de ce dernier dans le sens de la flèche F assure la couverture d'une bande de surface au sol. La forme de la zone 67 est sensiblement celle de la zone 24 de la figure 3, mais ses dimensions sont supérieures. Ceci résulte de ce que l'exemple d'épandeur de la figure 9 procure une vitesse plus élevée aux produits granuleux à l'entrée du déflecteur 18, en raison de l'absence de toute glissière entre ce dernier et les deux rouleaux 55 et 57, avec pour conséquence que les grains ne sont que très peu freinés par frottement après ces rouleaux.

Le cinquième exemple d'épandeur, représenté sur les figures 12 à 15 ne se distingue de celui qui vient d'être décrit ci-dessus que par la nature du dispositif de répartition associé à chacun des deux groupes lanceurs latéraux etc, accessoirement, par des aménagements complémentaires du dispositif de dosage, permettant de limiter sélectivement la largeur de la nappe projetée et donc la valeur de la largeur d'épandage du dispositif.

En effet,on retrouve un groupe lanceur comprenant trois rouleaux dont le rouleau supérieur 55 d'axe 56 délimitant avec le rouleau inférieur 57 d'axe 58 une goulotte de projection et délimitant par ailleurs, avec le rouleau intermédiaire 59 d'axe 60,une goulotte d'injection à la sortie de laquelle la nappe mise en vitesse entre les rouleaux 55 et 59 est déviée et guidée dans l'entrée de la goulotte de projection par la glissière 61. Sur la figure 13, qui est une vue de côté de la figure 12 avec le rouleau supérieur 55 enlevé, on a représenté les deux flasques du châssis 62ʹ, chacune de forme sensiblement trapézoïdale et disposée transversalement, et entre lesquelles les trois rouleaux du groupe lanceur sont montés tourillonnant, dans des paliers constitués de boîtes à roulements, telles que celles représentées en 63ʹ et 64ʹ pour les rouleaux 57 et 59, qui sont, dans cet exemple, entraînés en rotation par des arbres d'entraînement 65ʹ et 66ʹ. Entre les deux flasques de châssis 62ʹ est également monté le dispositif de répartition constitué, dans cet exemple, d'un déflecteur 38ʹ d'épanouissement dans un plan vertical, de structure très voisine de celle du déflecteur 38 de l'épandeur représenté sur les figures 5 et 6. Comme le déflecteur 38, le déflecteur 38ʹ,représenté en perspective sur la figure 16,est une pièce de tôle cintrée, ayant la forme d'une portion de cylindre délimitée entre deux bords latéraux 40ʹ et 41ʹ,cintrée en arc de cercle, un bord droit 42ʹ, selon la génératrice du cylindre, et qui constitue le bord amont du déflecteur, et un bord aval 43ʹ en forme de découpe incurvée entre les extrémités avals du petit bord latéral 40ʹ et du grand bord latéral 41ʹ. Par ses bords latéraux arqués 40ʹ et 41ʹ, le déflecteur 38ʹ est adjacent respectivement à chacune des flasques 62ʹ, et le bord amont 42ʹ s'étend perpendiculairement à ces deux flasques et entre eux, en étant sensiblement contenu dans un plan parallèle au plan tangent commun aux deux rouleaux 55 et 57, donc au plan moyen, selon son épaisseur, de la nappe projetée par ces rouleaux, mais légèrement décalé par rapport à ce plan du côté de l'axe 56 du rouleau 55, pour que, comme dans l'exemple d'épandeur des figures 5 et 6, la prise en charge de toute la nappe projetée soit assurée par le bord amont du déflecteur 38ʹ sensiblement tangentiellement à la direction de déplacement de la nappe, et donc sans éclatement de cette nappe qui est guidée et progressivement déviée par le déflecteur 38ʹ. Le bord aval 43ʹ de ce dernier, formé par une découpe dont la forme évolue progressivement d'un bord latéral à l'autre, est tel que l'angle formé entre le plan tangent commun aux deux rouleaux 55 et 57 (contenant le vecteur vitesse de la nappe projetée, qui est perpendiculaire aux axes 56 et 58 de ces rouleaux) et la tangente à la surface interne concave du déflecteur 38ʹ, dans un plan perpendiculaire aux axes 56 et 58 et passant par un point du bord aval 43ʹ,est un angle α qui varie entre 0°,au niveau du petit bord latéral 40ʹ,et 135°,au niveau du grand bord latéral 41ʹ, la variation de l'angle entre ces deux valeurs étant continue, progressive, de sorte que le déflecteur 38ʹ dévie, par sa face de déflexion interne et concave, la nappe projetée sortant de la goulotte de projection entre les rouleaux 55 et 57, en divisant cette nappe en fractions contiguës déviées de manière différentielle, selon un angle croissant d'un bord latéral à l'autre du déflecteur 38ʹ, et en poursuivant, au-delà du bord aval 43ʹ,des trajectoires libres inclinées selon les tangentes au déflecteur 38ʹ le long de ce bord aval 43ʹ. Ainsi, la fraction de nappe 44ʹa, prise en charge par le déflecteur 38ʹ au niveau de son bord latéral 40ʹ, pour lequel l'angle entre la tangente au niveau du bord aval 43ʹ et le plan tangent commun aux deux rouleaux 55 et 57 est nul, suit une trajectoire correspondant à la trajectoire libre des produits granuleux projetés, ce qui correspond à la portée maximum d'épandage, tandis que la fraction de nappe 44ʹg, prise en charge par le déflecteur 38ʹ au niveau de son grand bord latéral arqué 41ʹ, est déviée d'un angle de 135° par rapport à sa direction de déplacement en sortie de la goulotte de projection, de sorte que cette fraction de nappe 44ʹg se trouve dirigée sous l'épandeur et vers le plan médian longitudinal P de ce dernier. Les autres fractions de nappe sont progressivement déviées de manière continue d'un angle croissant entre ces deux valeurs extrêmes, et suivent des trajectoires permettant d'atteindre des points au sol situés entre le point le plus à l'extérieur, atteint par la fraction de la nappe 44ʹa, et le point situé le plus à l'intérieur (vers le plan P), atteint par la fraction de nappe 44ʹg. Pour la fixation du déflecteur 38ʹ sur les flasques de châssis 62ʹ, il est prévu, au voisinage des bords latéraux 40ʹ et 41ʹ du déflecteur, des lumières oblongues 67, ménagées dans le déflecteur 38ʹ et permettant le passage et le serrage d'écrous de fixation sur des pattes (non représentées) solidaires des flasques 62ʹ, la forme oblongue des lumières 67 permettant également de modifier la position du déflecteur 38ʹ sur le châssis sensiblement selon une rotation d'ensemble du déflecteur 38ʹ autour d'un axe géométrique 58ʹ indiqué sur la figure 14 comme étant sensiblement au milieu d'un rayon du rouleau 57, cet axe 58ʹ étant l'axe de courbure du déflecteur 38ʹ. Ainsi, l'angle de déviation en un point quelconque du bord aval 43ʹ du déflecteur 38ʹ correspond à l'angle au centre qui sous-tend l'arc d'un cercle délimité par l'intersection de la surface de déflexion interne et concave du déflecteur avec le plan perpendiculaire aux axes des rouleaux et passant par le point considéré du bord aval 43ʹ, sauf au niveau du petit bord latéral 40ʹ qui n'est pratiquement pas arqué.

Ainsi, comme dans l'exemple des figures 5 et 6, la couverture totale de la largeur d'épandage, avec une répartition assurée jusque sous la machine, est obtenue par l'interposition du déflecteur d'épanouissement 38ʹ dans la trajectoire de la nappe projetée de produits granuleux, et, comme dans l'exemple de la figure 9, la position des rouleaux de projection 55 et 57 détermine l'angle de la trajectoire permettant d'atteindre la portée maximum, et, qui est l'angle formé sur l'horizontale par le plan tangent commun aux deux rouleaux de projection 55 et 57, ce plan étant également dans ce cas perpendiculaire au plan tangent commun aux rouleaux 55 et 59 délimitant entre eux une goulotte d'injection dans laquelle les produits granuleux, alimentés selon une nappe dont le plan moyen est sensiblement confondu avec le plan tangent commun à ces deux rouleaux 55 et 59, sont mis en vitesse puis guidés par la glissière d'injection 61 jusqu'à l'entrée de la goulotte de projection.

Pour assurer la répartition des produits granuleux sur la largeur d'épandage maximum du dispositif, on utilise toute la largeur du déflecteur 38ʹ, entre ses bords latéraux 40ʹ et 41ʹ, comme cela est représenté sur les figures 12 et 13. Si l'on veut répartir les produits granuleux sur une largeur d'épandage plus réduite, il suffit alors d'utiliser la zone du déflecteur 38ʹ dont la découpe angulaire du bord aval 43ʹ correspond aux trajectoires souhaitées, ce qui est réalisé, dans cet exemple en n'alimentant en produits granuleux que cette portion du déflecteur 38ʹ, par le masquage d'une partie de la distribution, comme cela est représenté sur les figures 14 et 15. En effet, dans cet exemple on retrouve un dispositif de dosage du type assurant une distribution volumétrique, et comportant essentiellement un cylindre à palettes 8 entraîné positivement en rotation dans une gouttière délimitée latéralement à la base de la trémie 1 entre le bord inférieur de la paroi latérale 4 de cette trémie et la partie latérale arrondie 6, avec une bavette de déversement 7, du fond 5 de cette trémie, de sorte que le cylindre 8 et la partie arrondie 6 délimitent entre eux un canal dans lequel les produits granuleux 2 sont déplacés par les palettes entraînés par le cylindre 8 et déversés par gravité entre les rouleaux 55 et 59. De plus dans cet exemple, la nappe de produits granuleux tombant entre les rouleaux 55 et 59 est latéralement limitée entre deux volets 68 et 69, chacun en forme de V très ouvert et disposés l'un en regard de l'autre de sorte qu'ils délimitent un convergeant, l'un des volets 69 étant fixé au châssis et l'autre 68 monté coulissant sur ce châssis le long de deux longerons 71 et 72 parallèles aux axes des rouleaux et à celui du cylindre 8. Afin de fermer latéralement aussi bien que possible le goulotte d'injection, les parties inférieures des volets 68 et 69 s'étendent contre la bavette 7 et les parties de rouleaux 55 et 59 en regard. De plus, un obturateur 70, en forme de tôle incurvée engagée entre la paroi latérale 4 de la trémie et les palettes du cylindre 8 jusqu'à venir à proximité immédiate du fond 5 par son extrémité incurvée à concavité tournée vers l'axe du cylindre 8, est également monté coulissant sur les longerons 71 et 72, et solidaire du volet 68 en déplacement le long de ces longerons. Il suffit donc de déplacer l'obturateur 70 et le volet latéral 68 sur les longerons 71 et 72, par exemple en les déplaçant vers l'autre volet fixe 69, à partir de la position de la figure 13, pour obturer partiellement l'ouverture, qui, à la base de la trémie, permet à la masse granuleuse de s'écouler vers le canal d'alimentation entre le cylindre 8 et le fond arrondi 6. Le déplacement simultané du volet latéral mobile 68 avec l'obturateur 70 permet simultanément de réduire dans la même mesure la largeur de la nappe de produits granuleux tombant par gravité dans la goulotte d'injection entre les rouleaux 55 et 59 puis déviée, après sa mise en vitesse, par la glissière 61 et ensuite projetée hors de la goulotte de projection entre les rouleaux 55 et 57. Sur la figure 15, on a représenté le dispositif dans une configuration dans laquelle le volet latéral mobile 68 de guidage de l'écoulement dans le goulotte d'injection et l'obturateur 70 ont été déplacés depuis la position représentée sur la figure 13 vers le volet latéral fixe 69 sur une distance sensiblement égale à la moitié de la distance axiale des rouleaux, de sorte que la nappe de produits granuleux successivement alimentée par gravité dans la goulotte d'injection, mis en vitesse dans cette dernière, déviée par la glissière 61 et projetée par la goulotte de projection, a une largeur sensiblement égale à la moitié de la nappe prise en charge par le dispositif dans la configuration représentée sur la figure 13. De plus cette nappe moitié moins large est prise en charge par la moitié du déflecteur 38ʹ qui donne aux fractions contiguës de nappe déviée les trajectoires les plus inclinées par rapport à la trajectoire libre. Ainsi, la fraction de nappe 44ʹd qui correspond au bord de la nappe réduite de moitié en largeur et ayant longé le volet mobile 68, est déviée d'un angle d'environ 45° par rapport au plan tangent commun aux deux rouleaux 55 et 57 et dans lequel est situé le vecteur vitesse de la nappe projetée, au niveau de sa prise en charge par le bord amont 42ʹ du déflecteur 38ʹ. Les fractions contiguës de nappe projetée 44ʹd à 44ʹg, représentées sur les figures 14 et 15, et obtenues dans le cas d'une largeur de nappe réduite, correspondent donc à la partie des fractions contiguës déviées et projetées telles qu'elles sont représentées sur les figures 12 et 13, et qui donne une largeur d'épandage réduite par rapport à la largeur d'épandage maximum obtenue dans la configuration des figures 12 et 13.

Il est bien entendu également possible de prévoir que le volet latéral 69 soit également un volet mobile avec un obturateur analogue à l'obturateur 70 et déplaçable le long des longerons 71 et 72, afin, par un réglage des positions relatives des deux volets 68 et 69 et des deux obturateurs correspondants, de choisir la partie du déflecteur 38ʹ qui sera utilisée pour obtenir les trajectoires assurant un épandage sur des bandes de terrains plus ou moins proches du plan vertical et médian P de l'appareil. Par l'utilisation d'un petit obturateur mobile et réglable en position le long des longerons 71 et 72, indépendamment des volets 68 et 69, on peut également fractionner la nappe d'alimentation des produits granuleux en deux parties non adjacentes dont chacune est reçue sur l'une de deux parties non adjacentes du déflecteur 38ʹ, afin d'assurer l'épandage des produits granuleux sur deux bandes de terrain parallèles l'une à l'autre mais non adjacentes et plus ou moins décalées latéralement par rapport au plan médian et longitudinal P de l'appareil. Cet exemple de réalisation permet donc d'obtenir toutes les largeurs d'épandage souhaitées, à l'intérieur d'une largeur maximale déterminée par le plan tangent commun aux deux rouleaux 55 et 57, en limitant l'alimentation vers la ou les zones du déflecteur 38ʹ qui correspondent à la ou aux distances de projection choisie.

De plus, une boîte de vitesse peut également être montée sur le châssis, entre les arbres d'entraînement 65ʹ et 66ʹ des rouleaux 57 et 59, et également entre l'arbre d'entraînement du cylindre à palette 8 d'une part, et, d'autre part, la transmission destinée à être accouplée à la prise de force du tracteur, de sorte que l'utilisateur puisse modifier la vitesse de rotation des rouleaux afin de modifier en conséquence la largeur d'épandage.

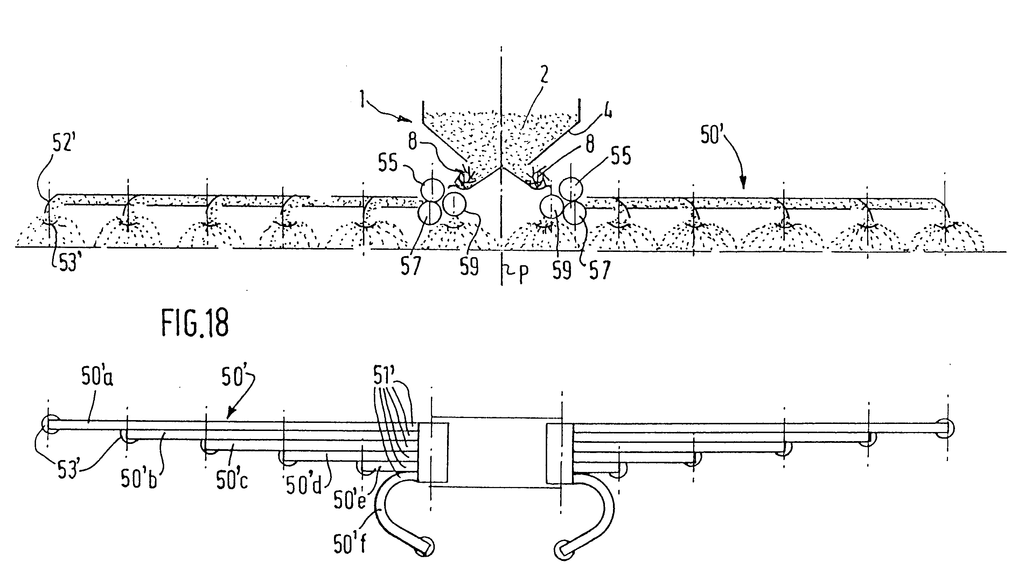

Le sixième exemple de réalisation, représenté sur les figures 17 et 18, est un épandeur à deux groupes lanceurs latéraux, disposés symétriquement de part et d'autre du plan médian P de l'appareil, et chacun du type constitué de trois rouleaux, exactement comme dans les deux exemples précédemment décrits en référence à la figure 9 et aux figures 12 à 15 respectivement. Chacun des deux groupes lanceurs est alimenté à partir de la trémie 1 par un dispositif de dosage identique à celui représenté sur la figure 9 ou sur les figures 12 à 15. De plus, chaque groupe lanceur coopère avec un dispositif de répartition qui, dans cet exemple, est constitué d'un faisceau 50ʹ de tubes de répartition sensiblement identique au faisceau 50 de l'exemple des figures 7 et 8.La seule différence avec ce dernier est que les parties d'extrémité amont 51ʹ des tubes 50ʹa à 50ʹf du faisceau sont directement en face de la sortie de la goulotte de projection, entre les rouleaux 55 et 57, et ne sont pas reliées à cette sortie par une glissière telle que 47 sure la figure 7. Pour le reste, on retrouve, à l'extrémité aval de chaque tube, un embout déviateur ou déflecteur 52ʹ coopérant avec un éclateur 53ʹ dans les mêmes conditions que les déflecteurs 52 et éclateurs 53 de l'exemple des figures 7 et 8. Cette réalisation apporte les mêmes avantages que celles des figures 7 et 8, avec de plus l'assurance d'une vitesse à l'entrée des tubes 50ʹa à 50ʹf qui est supérieure, et qui permet donc de plus forts débits,enraison de la suppression de tout frottement notable entre la sortie de la goulotte de projection et l'entrée des tubes, grâce à la suppression de la gllissière 47 de la figure 7.

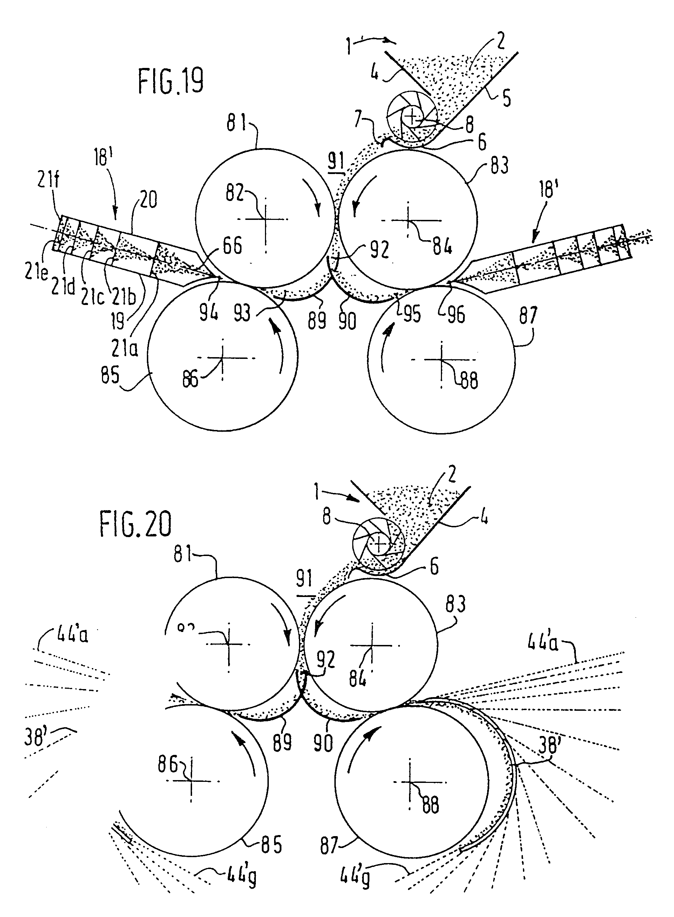

Le septième exemple, représenté sur la figure 19, comprend deux rouleaux supérieurs 81 et 83, montés en rotation sur le châssis autour de leurs axes respectifs 82 et 84, parallèles l'un à l'autre et à la direction de déplacement de l'appareil, et disposés dans un même plan horizontal. Ces deux rouleaux supérieurs 81 et 83 sont sensiblement tangents extérieurement l'un à l'autre afin de délimiter entre eux une goulotte d'injection verticale, dont la sortie 92 est en position inférieure et l'entrée 91, en position supérieure, est alimentée en produits granuleux 2 provenant de la trémie 1 par un dispositif de dosage à distribution volumétrique identique à celui équipant les réalisations des figures 7, 9, 12 et 17, et comportant un cylindre distributeur à palettes 8 dans une ouverture latérale à la base de la trémie 1, entre la paroi latérale 4 et le fond 5 à gouttière arrondie 6 à bavette de déversement 7, l'alimentation de l'entrée 91 de cette goulotte d'injection se faisant par gravité. De plus, l'épandeur comporte deux rouleaux inférieure 85 et 87, montés en rotation sur le châssis chacun autour de son axe 86 et 88 respectivement, qui sont parallèles aux axes 82 et 84 également disposés dans un même plan horizontal, l'axe 86 étant cependant à l'extérieur de l'axe 82 du rouleau 81 par rapport à la goulotte d'injection, tandis que l'axe 88 du rouleau 87 est à l'extérieur de l'axe 84 du rouleau 83 par rapport à cette même goulotte d'injection, les positions relatives des axes 86 et 88 par rapport respectivement aux axes 82 et 84 étant telles que le rouleau inférieur 85 est sensiblement tangent extérieurement au rouleau 81 et délimite avec ce dernier une goulotte de projection d'entrée 93 et de sortie 94, tandis que le rouleau inférieur 87 est également sensiblement tangent extérieurement au rouleau supérieur 83 et délimite avec ce dernier une seconde goulotte de projection d'entrée 95 et de sortie 96. En raison de la position relative des axes 86 et 88 des rouleaux inférieurs 85 et 87 par rapport à l'axe 82 ou 84 du rouleau supérieur 81 ou 83 avec lesquels chacun des rouleaux inférieurs est extérieurement tangents, les plans tangents communs contre d'une part les rouleaux 81 et 85 et, d'autre part, les rouleaux 83 et 87, et qui correspondent au plan moyen selon leur épaisseur, des nappes projetées hors des goulotes de projection correspondante, sont des plans inclinés vers l'extérieur et vers le haut par rapport au plan vertical de la goulotte d'injection 91-92. Ces orientations sont donc très favorables à l'obtention de trajectoires assurant une portée maximum. Les deux rouleaux supérieurs 81 et 83 ont la même dimension axiale, qui est le double de celle des deux rouleaux inférieurs 85 et 87, lesquels sont axialement décalés l'un par rapport à l'autre d'une distance sensiblement égale à leurs propres dimensions axiales. L'épandeur comporte de plus deux glissières d'injection 89 et 90, qui sont analogues à la glissière d'injection 61 des exemples des figures 9 et 12. Les deux glissières d'injection 89 et 90 sont adjacentes l'une à l'autre dans un plan vertical et transversal, et elles sont donc décalées axialement dans la même mesure que les rouleaux inférieurs 85 et 87, de sorte que la glissière 89, à concavité tournée vers l'axe 82 du rouleau supérieur 81, assure par son bord amont, une prise en charge à la sortie 92 de la goulotte d'injection d'une moitié de la nappe de produits granuleux mis en vitesse dans cette dernière et la guide et la dévie jusqu'à l'injecter tangentiellement dans l'entrée 93 de la goulotte de projection entre les rouleaux 81 et 85, et à la sortie de laquelle, en 94, cette moitié de nappe injectée et projetée est prise en charge par un déflecteur d'épanouissement 18ʹ identique à celui utilisé dans l'exemple de la figure 9. L'autre glissière d'injection 90, cintrée et à concavité tournée vers l'axe 84 du rouleau supérieur 83, prend en charge tangentiellement, dans la sortie 92 de la goulotte d'injection, l'autre moitié de la nappe de produits granuleux mis en vitesse dans cette goulotte, et guide et dévie cette moitié de nappe qui est injectée tangentiellement dans l'entrée 95 de la goulotte de projection entre les rouleaux 83 et 87, cette moitié de nappe injectée et projetée étant alors prise en charge tangentiellement par un autre déflecteur d'épanouissement 18ʹ, dont la structure et le fonctionnement ne sera pas à nouveau décrit. On réalise ainsi deux groupes lanceurs latéraux combinés à une goulotte d'injection commune alimentée par un dispositif de dosage commun. La nappe mise en vitesse dans la goulotte d'injection est ensuite divisée en deux partie dont chacune est projetée hors de l'une des deux goulottes de projection et ensuite réparties latéralement, sur l'un des côtés de l'épandeur, par un déflecteur d'épanouissement dans un plan "horizontal". Par rapport aux réalisations des figures 9, 12 à 15 et 17 et 18, l'encombrement vertical de la réalisation de la figure 19 est supérieure, mais elle permet de bénéficier d'une hauteur de charge, entre la sortie de la gouttière 6 et la partie centrale de la goulotte d'injection 91-92, qui est importante, de sorte que la pression de prise en charge des produits granuleux dans cette goulotte est importante, ce qui assure des débits élevés. De plus, la réalisation de la figure 19, est plus économique que celles des figures 9, 12 à 15 et 17, car elle ne comporte que quatre rouleaux au lieu de six et et un seul dispositif de dosage au lieu de deux. Cependant, du fait de la division de la nappe injectée en deux demi-nappes projetées latéralement de part et d'autre, cette réalisation n'est intéressante que pour assurer l'épandage sur des largeurs relativement réduites.

Dans cette réalisation, comme dans les précédentes, les contraintes qui guident le choix du ou des rouleaux qui doit ou doivent être positivement entraînés en rotation à partir de la prise de force du tracteur sont que l'un au moins des deux rouleaux qui viennent les premiers en contact avec les produits granuleux, notamment dans une goulotte d'injection, doit être entraînée positivement pour assurer l'écoulement des produits granuleux. De plus, l'un au moins des deux rouleaux qui sont les derniers en contact avec les produits granuleux, dans les tous cas au niveau de la goulotte de projection, doit être entraîné positivement pour garantir la vitesse de lancement et donc la largeur d'épandage. Pour ces raisons, dans la réalisation de la figure 19, les rouleaux positivement entraînés peuvent être les rouleaux 81 et 83, ou les rouleaux 81 et 87, ou les rouleaux 83 et 85. Dans ces trois cas, les deux autres rouleaux sont montés fous en rotation autour de leurs axes et entraînés par frottement et par l'intermédiaire des produits granuleux.

Le huitième exemple de réalisation, représenté sur la figure 20, ne se distingue de celui que l'on vient de décrire que par la nature du dispositif de répartition associé à chacune des deux paires de rouleaux délimitant l'une des deux goulottes de projection. En effet, on retrouve les quatre rouleaux 81, 83, 85 et 87, délimitant, par les deux rouleaux supérieurs 81, 83, la goulotte d'injection commune 91-92, et, entre chacun des deux rouleaux inférieurs 85 et 87, et les rouleaux supérieurs corrspondants 81 ou 83, une goulotte de projection dans laquelle une moitié de la nappe mise en vitesse entre les deux rouleaux supérieurs est injectée grâce à l'une des deux glissières d'injection 89 et 90. On retrouve également un unique dispositif de dosage à distribution volumétrique. Par contre, chacun des deux déflecteurs d'épanouissement "horizontal" 18ʹ de la figure 19 a été remplacé par un déflecteur 38' d'épanouissement en direction verticale, de structure et de fonctionnement tout-à-fait identiques à celui représenté sur la figure 16 et équipant l'épandeur des figures 12 à 15. Dans cet exemple, il est à noter que la coopération des rouleaux 81 et 85 avec le déflecteur 38ʹ associé est la même que celle des rouleaux 55 et 57 avec le déflecteur 38ʹ correspondant dans l'exemple de la figure 12 à 15.

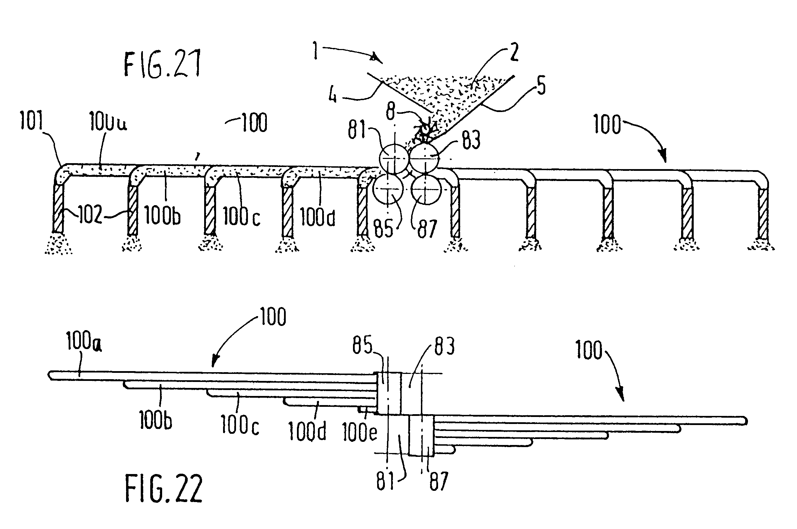

Le neuvième exemple de réalisation, représenté sur les figures 21 et 22, comprend également quatre rouleaux montés et coopérant comme dans les réalisations des figures 19 et 20, pour délimiter deux goulottes de projection et une seule goulotte d'injection alimentée par un unique dispositif de dosage. Les mêmes références numériques sont donc utilisées pour désigner les éléments équivalents. Par contre, les dispositifs de répartition, montés de chaque côté de l'épandeur, sont constitués chacun d'un faisceau 100 de tubes de répartition analogue aux faisceaux 50 et 50ʹ des exemples de réalisation des figures 7 et 17. Cependant, chaque faisceau 100 n'est constitué que de cinq tubes rectilignes, de longueurs différentes, 100a à 100e, et ne comporte pas de tubes cintrés vers l'arrière. Les extrémités amonts 101 des tubes de chaque faisceau 100 sont adjacentes, directement en regard de la sortie de la goulotte de projection correspondante et perpendiculaires aux axes des rouleaux délimitant cette goulotte. Du fait du décalage axial des deux rouleaux inférieurs 85 et 87, las deux faisceaux 100 sont également décalés axialement de la même distance. L'extrémité aval de chacun des tubes est conformée en embout 101 recourbé vers la bas et prolongé par un conduit souple sensiblement vertical 102, de sorte que les faisceaux de tubes 100 permettent l'épandage an lignes localisées et parallèles à la direction de déplacement de l'épandeur.

Tous les exemples de réalisation décrits ci-dessus comportant un ou deux groupes lanceurs "latéraux", c'est-à-dire constitués de rouleaux dont les axes sont sensiblement parallèles à la direction de déplacement de l'épandeur.

Il est bien entendu possible que différents groupes lanceurs soient disposés an batterie sur un même épandeur, pour assurer la répartition des produits granuleux sur des plages angulaires définies par des angles d'azimut différents, les axes des rouleaux correspondants étant alors plus ou moins inclinés en conséquence sur la direction de déplacement.

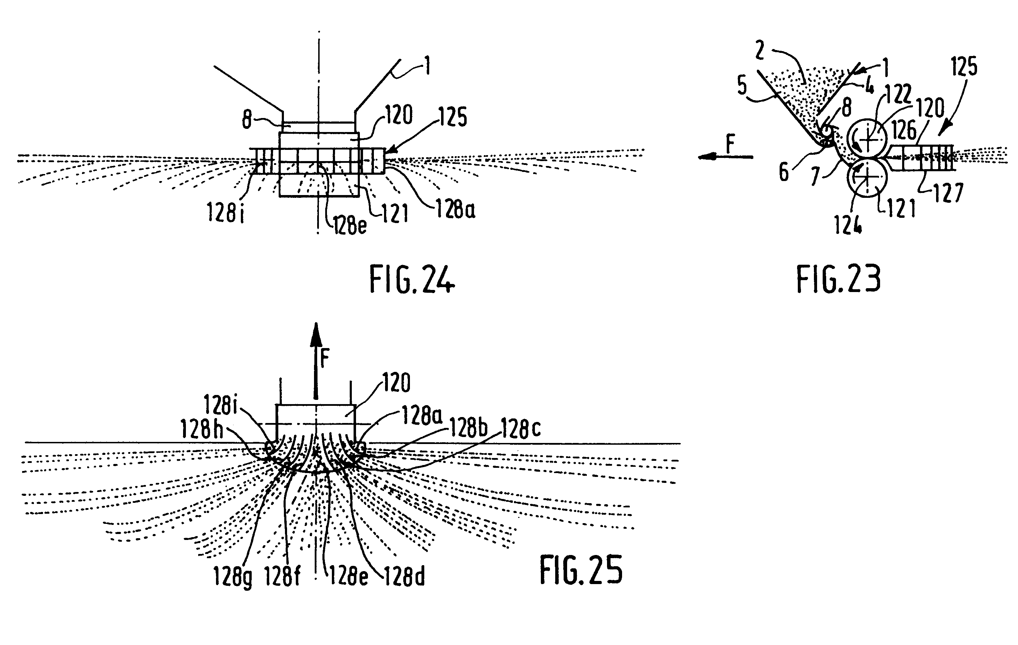

Sur les figures 23 à 25, on a représenté schématiquement un dernier exemple d'épandeur, de structure simplifiée et du type dit "transversal", car équipé d'un groupe lanceur dont les rouleaux ont des axes 122 et 124 perpendiculaires à la direction de déplacement de l'épandeur, indiquée par la flèche F sur les figures 23 et 25.

La groupe lanceur est constitué uniquement du rouleau supérieur 120 et du rouleau inférieur 121, montés en rotation sur le châssis autour de leurs axes parallèles 122 et 124 qui sont contenus sensiblement dans un même plan vertical, et un seul rouleau est entraîné positivement en rotation. Les deux rouleaux, extérieurement tangents l'un à l'autre, délimitent ainsi une goulotte de projection sensiblement horizontale, alimentée en produits granuleux 2 provenant de la trémie 1 de la même façon que dans certains exemples précédents, c'est-à-dire par un dispositif de dosage à cylindre de distribution volumétrique 8 muni de palettes et coopérant avec la gouttière 6 du fond 5 de la trémie, la bavette de déversement 7 formant glissière d'injection dans la goulotte. La sortie de cette dernière débouche directement en regard d'un déflecteur 125 d'épanouissement en éventail dans un plan sensiblement "horizontal". Ce déflecteur 125 est analogue aux déflecteurs 18 et 18ʹ des figures 2, 11 et 19 en ce sens qu'il est constitué, entre une plaque de base 127 et une plaque de couverture 126, parallèles l'une à l'autre, d'un faisceau de canaux adjacents et cintrés, délimités par des cloisons cintrées et non adjacentes, perpendiculaires aux plaques 126 et 127, et dont les extrémités amonts sont parallèles à la direction de déplacement de la nappe projetée sortant de la goulotte de projection sensiblement selon le plan tangent commun horizontal aux deux rouleaux, tandis que les extrémités aval des cloisons sont inclinées selon des angles différents pour épanouir la nappe projetée en fractions de nappe contiguës suivant des trajectoires selon des directions différentes, afin de couvrir la largeur d'épandage. Dans cet exemple cependant, le faisceau des cloisons 128a à 128i est tel que la cloison 128e du milieu du faisceau est plane et toujours prallèle à la direction de la nappe projetée, tandis que les cloisons 128a à 128b de la moitié du faisceau d'un même côté de la cloison centrale 128e sont cintrées et présentent leur concavité tournée de ce côté avec des rayons de courbure moyens décroissant de la cloison 128d la plus proche de la cloison central 128e à la cloison 128a la plus éloignée de la cloison centrale et que les cloisons 128f à 128i de l'autre moitié du faisceau, et de l'autre coté de la cloison centrale 128e sont également cintrées de manière à présenter leur concavité tournée vers cet autre côté et présente des rayons de courbure moyens qui décroissent de la cloison 128f la plus proche à la cloison 128i la plus éloignée de la cloison centrale 128e. Cette structure en éventail assure une répartition vers l'arrière et latéralement sur les deux côtés de l'épandeur, sur une largeur d'épandage limitée en raison des déviations angulaires importantes nécessaires pour projeter latéralement.

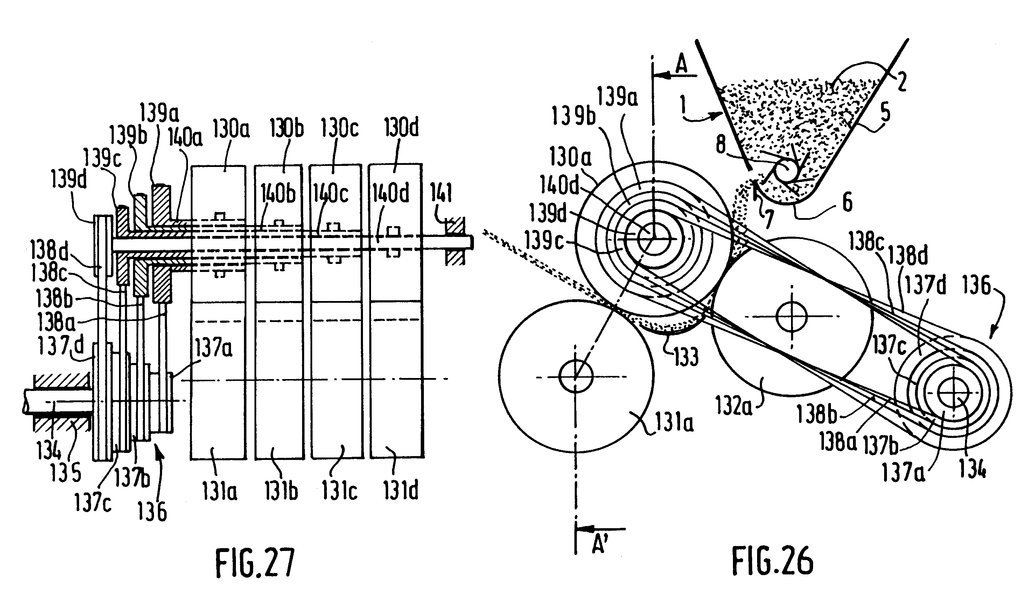

L'épandeur des figures 26 et 27 est constitué de quatre groupes lanceurs adjacents, dont les premiers rouleaux 130a à 130d formant un premier ensemble de rouleaux coaxiaux, disposés côte à côte et de même rayon. De même les seconds rouleaux 131a à 131d des groupes lanceurs forment un second ensemble de rouleaux de même rayon, disposés côte à côte, coaxiaux et d'axe commun parallèle à celui des rouleaux 130a à 130d qui sont disposés au-dessus des rouleaux 131a à 131d et légèrement décalés par rapport à ce dernier vers la trémie 1 et le dispositif d'alimentation (6, 7, 8) du type déjà décrit dans les exemples. De plus, chaque groupe lanceur comprend une goulotte d'injection délimitée entre le premier rouleau 130a à 130d correspondant et l'un tel que 132a des rouleaux d'un troisième ensemble de rouleaux coaxiaux côte à côte et de même rayon, disposé vers l'intérieur des premiers et seconds rouleaux, sensiblement sous la trémie 1, à un niveau intermédiaire entra les premiers et seconds rouleaux. Chacun de ces troisièmes rouleaux, tel que 132a, est extérieurement tangent au premier rouleau 130a à 130d correspondant de sorte que leur plan tangent commun soit perpendiculaire au plan tangent commun des rouleaux 130a à 130d et 131a à 131d.

Chacun des quatre groupes lanceurs adjacents est ainsi alimenté dans les mêmes conditions que le groupe lanceur représenté sur la figure 9: les produits granuleux sont alimentés en une nappe continue déversée depuis la base de la trémie 1 par l'organe de distributation portatif 8, et centrée, selon son épaisseur dans le plan tangent commun des premier et troisième rouleaux délimitant la goulotte d'injection correspondante et la nappe mise en vitesse à la sotie de cette goulotte d'injection est déviée et dirigée vers l'entrée de la goulotte de projection délimitée entre les premier et second rouleaux correspondants, par un déflecteur d'injection 133 commun aux quatre groupes lanceurs, et en tout point analogues au déflecteur d'injection 61 de l'exemple de le figure 9.

Dans l'exemple des figures 26 et 27, les seconds rouleaux 131a à 131d et les troisièmes rouleaux tels que 132a sont chacun montés fou en rotation autour de leur axe respectif, tandis que les premiers rouleaux 130a à 130d sont des rouleaux moteurs entraînés en rotation autour de leur axe commun, avec des vitesses différentes d'un rouleau à l'autre. Les seconds et troisièmes rouleaux sont ainsi entraînés en rotation autour de leur axe respectif par contact et frottement avec la nappe de produits granuleux et/ou les premiers rouleaux 130a à 130d.

L'entrainement des premiers roulaaux 130a à 130d à des vitesses différentes d'un rouleau à l'autre, et qui sont croissantes de la vitesse de rotatiob du premier rouleau 130a à la vitesse de rotation du rouleau 130d, est assuré à l'aide d'un arbre d'entraînement 134, monté tourillonnant dans un palier 135 du châssis, et dont est solidaire en rotation une poulie d'entraînament étagée 136, à quatre flasques à gorge adjacants 137a à 137d, dont les rayons sont progressivement croissants d'un flasque circulaire à l'autre, du flasque d'extrémité 137a de plus petit rayon au flasque d'extrémité 137d de plus grand rayon. Chacun des quatre étages de la poulia étages d'entraînement 136 est reliée par une courroie de transmission 138e à 138d à l'une respectivement des poulies d'un jeu de quatre poulies étagées 139a à 139d, de rayons progressivement décroissants d'une poulie à l'autre. Ainsi, le flasque circulaire 137a de plus petit diamètre est relié par la courroie 138a à la poulie de renvoi 139a de plus grand diamètre, et, inversement la flasque 137d de plus grand diemètre est relié par la courroie 138d à la poulie de renvoi 139d de plus petit rayon. Las quatre poulies de renvoi 139a à 139d sont disposées côte à côte, coaxialement et sont chacune solidaires en rotation de l'un respectivement de quatre arbres de transmission tubulaires et coaxiaux 140a à 140d, montés en rotation les uns dans les autres, l'arbre central 140d étant de plus monté tourillonnant dans un palier d'extrémité 141 du carter. Cet arbre 140d est solidaire en rotation du premier rouleau 130d tandis que l'arbre tubulaire 140c qui l'entoure, et qui est plus court est lui solidaire en rotation du premier rouleau 130c. De même, l'arbre tubulaire 140b, plus court que l'arbre 140c et qui l'entoure est solidaire en rotation du premier rouleau 130b, et enfin cet arbre 140b est lui-même entouré d'un arbre plus court 140a qui est solidaire en rotation du premier rouleau 130a.

Dans cet exemple de réalisation, la répartition des produits granuleux est assurée par leur projection avec des vitesses de lancement différentes selon qu'ils sont en vitesse et projetés par l'un ou l'autres des quatre groupes lanceurs adjacants. Ce dispositif n'a donc pas besoin de moyen de déflection pour assurer la répartition, car les moyens d'entraînement à des vitesses différentes des rouleaux moteurs constitue en fait les moyens de répartition.

Dans les réalisations des figures 26 et 27, les moyens de répartition ne comportent aucun déflecteur mais sont constitués par des formes et agencements particuliers des rouleaux et/ou par des moyens d'entraînement en rotation de ce dernier, de façon à assurer des vitesses de lancement différentes. Cependant, ces moyens peuvent être combinés à des moyens de déflection des différentes types décrits ci-dessus.

## Revendications

1. Epandeur de produits granuleux par projection forcée, comprenant:
- un châssis porteur (62', 62') sur lequel est monté au moins un organe de transmission d'un mouvement de rotation qui est destiné à être accouplé à un moteur,
- une trémie (1) montée sur le châssis et destinée à contenir une charge de produits granuleux (2) pouvant s'écouler par au moins une ouverture (3) à la base de la trémie (1),
- des moyens de dosage alimentés en produits granuleux à partir d'au moins une ouverture (3) de la base de la trémie (1),
- des moyens (10) de mise en vitesse et de projection forcée des produits granuleux, qui sont supportés par le châssis et alimentés en produits granuleux à partir des moyens de dosage, et
- des moyens (18) de répartition des produits granuleux projetés, lesdits moyens de répartition (18) étant également supportés par le châssis et dans lequel lesdits moyens de mise en vitesse et de projection forcée (10) sont agencés en au moins un groupe lanceur, comprenant un premier rouleau (11, 55) monté en rotation sur le châssis autour de son axe (12, 56) fixe, et dont la surface latérale externe forme une première surface sans fin mobile délimitant, avec une seconde surface sans fin mobile, une goulotte de projection ayant une entrée (15, 64) et une sortie (16, 65) qui sont de section de passage progressivement et respectivement décroissante et croissante, l'une au moins des surfaces sans fin étant entraînée positivement à partir dudit organe de transmission et constituant une surface menante qui entraîne les produits granuleux introduits dans l'entrée (15, 64) de la goulotte de projection jusqu'à la sortie (16, 65) de cette dernière de sorte que ces produits reçoivent, entre les deux surfaces sans fin mobiles, une vitesse linéaire qui assure leur projection, caractérisé en ce que:
- la seconde surface sans fin mobile est également formée par la surface latérale externe d'un second rouleau (13, 57) monté en rotation sur le châssis autour de son axe (14, 58) et dans une position telle que le premier rouleau (11, 55) et le second rouleau (13, 57) dont l'un au moins des rouleaux (11, 55) et (13, 57) est garni d'un revêtement périphérique en un matériau élastiquement déformable, soient sensiblement tangents extérieurement l'un à l'autre, de sorte que les produits granuleux soient projetés hors de la goulotte de projection (15, 16) en une nappe mince, les rouleaux (11, 55) et (13, 57) étant des rouleaux cylindriques, dont les axes (12, 14) sont sensiblement parallèles l'un à l'autre et de préférence sensiblement horizontaux,
- l'épandeur comprend de plus des moyens d'injection des produits granuleux (2) dans la goulotte de projection (64, 65) d'au moins un groupe lanceur, lesdits moyens d'injection comprenant une goulotte d'injection (62, 63), ayant une entrée (62) et une sortie (63) dont les sections de passages sont progressivement et respectivement décroissante et croissante, et qui est située entre la base (6) de la trémie (1) et la goulotte de projection (64, 65) de chaque groupe lanceur correspondant, et délimitée par les surfaces latérales externes de deux rouleaux cylindriques (55, 59) sensiblement tangents extérieurement l'un à l'autre et montés en rotation sur le châssis chacun autour de son axe (56, 60) sensiblement parallèles à l'axe (58) du second rouleau (57) de chaque groupe lanceur correspondant, l'un au moins des deux rouleaux (55, 59) qui délimitent la goulotte d'injection (62, 63) étant positivement entraîné en rotation à partir dudit organe de transmission, de façon à constituer un rouleau menant entraînant les produits granuleux introduits depuis la base de la trémie (1) dans l'entrée (62) de la goulotte d'injection jusqu'à la sortie de cette dernière (63) en leur transmettant une vitesse linéaire telle que les produits granuleux quittent la sortie (63) de la goulotte d'injection en une nappe mince centrée sur le plan tangent commun aux deux rouleaux (55, 59) délimitant ladite goulotte d'injection, lesdits moyens d'injection comprenant également pour chaque groupe lanceur correspondant, un déflecteur d'injection (61) supporté par le châssis et qui est cintré, à concavité tournée vers le premier rouleau (55) et qui guide la nappe des produits granuleux quittant la sortie (63) de la goulotte d'injection jusqu'à l'entrée (64) de la goulotte de projection.

2. Epandeur selon la revendication 1, caractérisé en ce que le plan tangent commun aux deux rouleaux (55, 59) qui délimitent la goulotte d'injection (62, 63) est sensiblement perpendiculaire au plan tangent commun aux premier (55) et second (57) rouleaux délimitant la goulotte de projection (64, 65) de chaque groupe lanceur correspondant.

3. Epandeur selon l'une des revendications 1 et 2, caractérisé en ce que le premier rouleau (55) délimitant une goulotte de projection (64, 65) alimentée depuis une goulotte d'injection (62, 63) constitue simultanément l'un des deux rouleaux (55, 59) délimitant ladite goulotte d'injection, l'autre étant un troisième rouleau (59), et l'axe (56) du premier rouleau (55) étant situé au-dessus de l'axe (58) du second rouleau (57) correspondant, et, de préférence, à l'intérieur de l'axe (58) de ce dernier, par rapport à la base (6) de la trémie (1).

4. Epandeur selon la revendication 3, caractérisé en ce que chaque groupe lanceur comprend ses propres moyens d'injection, et l'axe (60) de son troisième rouleau (59) est situé à l'intérieur de l'axe (58) du second rouleau (57) correspondant, par rapport à la base (6) de la trémie (1) et à un niveau situé entre les niveaux des axes (56, 58) des premier (55) et second (57) rouleaux du groupe lanceur correspondant, le ou les rouleaux positivement entraînés en rotation à partir dudit organe de transmission étant, pour chaque groupe lanceur, soit le premier rouleau (55) soit les second et troisième rouleaux (57, 59).

5. Epandeur selon l'une des revendications 1 à 3, caractérisé en ce que les axes (82, 84) des premier et troisième rouleaux (81, 83) sont sensiblement situés dans un même plan horizontal, de sorte que ces rouleaux délimitent une goulotte d'injection (91, 92) sensiblement verticale, et le troisième rouleau (83) délimite simultanément avec un quatrième rouleau (87) cylindrique, également monté en rotation sur le châssis autour de son axe (88) sensiblement parallèle aux axes (82, 84, 86) des premier (81), second (85) et troisième (83) rouleaux et situé en-dessous dudit plan horizontal, de sorte que les troisième et quatrième rouleaux (83, 87) soient sensiblement tangents extérieurement l'un à l'autre, une seconde goulotte de projection (85, 96), analogue à celle (93, 94) délimitée entre les premiers et seconds rouleaux (81, 85), l'un au moins des troisième et quatrième rouleaux (83, 87) étant garni d'un revêtement périphérique en un matériau élastiquement déformable, et l'un au moins des troisième et quatrième rouleaux (83, 87) étant positivement entraîné en rotation à partir dudit organe de transmission, de sorte que les moyens de mise en vitesse et de projection forcée sont agencés en deux groupes lanceurs qui ont une goulotte d'injection (91, 92) commune qui comprennent l'un les premier et second rouleaux (81, 85) et l'autre les troisième et quatrième rouleaux (83, 87), et qui coopèrent chacun avec un dispositif de répartition associé (18'), les moyens d'injection comprenant également en plus de la goulotte d'injection commune (91, 92) et du déflecteur d'injection (89) à concavité tournée vers le premier rouleau (81) et qui ne s'étend que sur une partie de la dimension axiale de la goulotte d'injection (91, 92), un second déflecteur d'injection cintrée (90) à concavité tournée vers le troisième rouleau (83) et supporté par le châssis et monté en position adjacente audit déflecteur d'injection (89), entre les premier et troisième rouleaux (81, 83) et sous la sortie (92) de la goulotte d'injection, le long de la partie restante de la dimension axiale de cette dernière, de sorte que la nappe de produits granuleux sortant de la goulotte d'injection (91, 92) est divisée en deux portions dont chacune est guidée par un déflecteur d'injection (89, 90) correspondant jusqu'à l'entrée (93, 95) de la goulotte de projection correspondante.

6. Epandeur selon la revendication 5, caractérisé en ce que les second et quatrième rouleaux (85, 87) et les deux déflecteurs d'injection (89, 90) ont une même dimension axiale, qui est sensiblement la moitié de celle des premier et troisième rouleaux (81, 83) et en ce que, d'une part, les second et quatrième rouleaux (85, 87) et, d'autre part, les deux déflecteurs d'injection (89, 90) sont décalés axialement l'un par rapport à l'autre sensiblement de la valeur de leur dimension axiale, de façon à diviser la nappe de produits granuleux sortant de la goulotte d'injection (91, 92) en deux portions sensiblement égales et à limiter au maximum l'encombrement axial des second et quatrième rouleaux (85, 87).

7. Epandeur selon l'une des revendications 1 à 6, du type dans lequel les moyens de répartition comprennent, pour au moins un groupe lanceur, un déflecteur de répartition (38') qui divise la nappe de produits granuleux sortant de la goulotte de projection correspondante en fractions contiguës qui sont déviées, dans un plan perpendiculaire aux axes (56, 58) des premier et second rouleaux (55, 57) délimitant ladite goulotte de projection, selon des trajectoires différentes présentant des orientations angulaires qui varient progressivement entre deux inclinaisons externes par rapport à la direction de déplacement de produits granuleux à la sortie de ladite goulotte de projection, caractérisé en ce que le déflecteur de répartition (38') présente une surface de déflection continue et cintrée, à concavité tournée vers l'axe (58) dudit second rouleau (57), et délimitée entre un bord amont (42') présentant une inclinaison pratiquement nulle sur le plan tangent commun auxdits premier et second rouleaux (55, 57) et sensiblement contenu dans ledit plan tangent, deux bords latéraux (40', 41') et un bord aval (43') défini par une découpe incurvée entre les extrémités avales des deux bords latéraux (40, 41'), de sorte que l'angle de déviation formé, pour tout point de ladite découpe, entre ledit plan tangent commun et la tangente a ladite surface de déflection passant par ledit point et dans le plan correspondant perpendiculaire aux axes (56, 58) desdits premier et second rouleaux (55, 57), est un angle qui, lorsque ledit point est déplacé d'une extrémité à l'autre de ladite coupe, varie de manière continue entre une valeur minimale, sur un bord latéral (40') et une valeur maximale sur l'autre bord latéral (41'), de sorte que lesdites fractions de nappe contiguës sont guidées sans éclatement par la surface déflectrice, de son bord amont (42') à son bord aval (43'), au-delà duquel elles poursuivent librement des trajectoires qui sont progressivement inclinées selon les tangentes à la surface de déflection le long de son bord aval, et d'un bord latéral à l'autre de ladite surface de déflection.

8. Epandeur selon la revendication 7, caractérisé en ce que la vapeur minimale de l'angle de déviation est pratiquement nulle et la valeur maximale est de l'ordre de 135°C, de sorte que la largeur d'épandage s'étend du point de chute des produits granuleux ayant suivi une trajectoire pratiquement libre depuis la sortie de la goulotte de projection jusqu'au point de chute des produits granuleux ayant suivi la trajectoire la plus déviée (44'g) et situé sous l'épandeur lui-même.

9. Epandeur selon l'une des revendications 1 à 6, caractérisé en ce que les moyens de répartition comprennent, pour au moins un groupe lanceur, un déflecteur (18) d'épanouissement de la nappe projetée de produits granuleux dans un plan non vertical et sensiblement parallèle aux axes (12, 14) des rouleaux (11, 13) délimitant la goulotte de projection (15, 16) correspondante, ledit déflecteur (18) présentant un faisceau de surface de déflection (21aà 21g), qui sont espacées les unes des autres sensiblement dans la direction des axes (12, 14) des rouleaux, sensiblement perpendiculaires à un plan parallèle auxdits axes, et cintrées chacune entre son bord amont et son bord aval, en présentant leur concavité dans l'un des deux sens desdits axes, de sorte que les plans tangents auxdites surfaces de déflection (21a à 21g), le long de leur bord aval soient inclinées sur lesdits axes (12, 14) d'un angle qui varie progressivement entre une valeur minimale et une valeur maximale, d'une extrémité à l'autre du faisceau, afin que lesdites surfaces de déflection délimitent entre elles des passages cintrés et adjacents, présentant chacun une entrée et une sortie entre lesdits bords respectivement amont et aval des deux surfaces de déflection voisines qui le délimitent, lesdits bords amont desdites surfaces de déflection (21a à 21f) divisant ladite nappe projetée en fractions contiguës de nappe dont chacune est déviée, dans l'un desdits passages qui la guident jusqu'à sa sortie, au-delà de laquelle elle poursuit librement une trajectoire sensiblement dans le plan tangent à la surface de déflection qui l'a déviée et au niveau du bord aval de ladite surface de déflection.

10. Epandeur selon la revendication 9, caractérisé en ce que ladite valeur maximale est de 90°, et ladite valeur minimale est telle que la trajectoire correspondante ramène la fraction de nappe (22a) qui suit cette trajectoire vers le plan vertical P passant par la base de la trémie (1) d'alimentation du groupe lanceur correspondant.

11. Epandeur selon l'une des revendications 9 et 10, caractérisé en ce que chaque surface de déflection (21'c à 21'e) présente une partie amont (26c à 26e) plane, faiblement inclinée sur la direction d'écoulement (F1) de la nappe projeté à l'entrée desdits passages, de préférence d'un angle (gamma) inférieur à 10°, et suffisamment longue pour que toute la fraction de nappe se déplaçant selon ledite direction de l'écoulement et guidée par ladite surface de déflection (21'c à 21'e) rencontre ladite partie amont (26c à 26e) de cette dernière avant d'être déviée par une partie cintrée (27c à 27e) de cette surface de déflection, de sorte que ladite fraction de nappe soit mise en contact avec ladite surface de déflection pratiquement sans rebond des produits granuleux sur cette surface.

12. Epandeur selon l'une des revendications 9 à 11, caractérisé en ce que chaque surface de déflection (21'c à 21'e) présente une partie avale (28c à 28e) plane, faisant suite à une partie cintrée (27c à 27e), et déterminant l'orientation de la trajectoire de la fraction de nappe correspondante au-delà du bord aval (29c à 29e) correspondant.

13. Epandeur selon l'une des revendications 9 à 12, caractérisé en ce que chaque passage cintré est délimité par un canal ayant un fond (19), de parois latérales en regard (21a à 21f), dont l'une est convexe et l'autre est concave et définit la surface de déflection correspondant audit passage, chaque canal étant de préférence fermé par une paroi supérieure (20), en regard du fond (19).

14. Epandeur selon la revendication 13, caractérisé en ce que les fonds des canaux sont constitués par une unique plaque de base (19), les parois latérales des canaux sont définies par les faces opposées de cloisons cintrées (21a à 21f) fixées sur la plaque de base (19) perpendiculairement à cette dernière, et les éventuelles parois supérieures des canaux sont constituées par une unique plaque de couverture (20), de sorte que le déflecteur d'épanouissement (18) présente l'aspect d'une boîte plate dont le volume interne est subdivisée par des cloisons (21a, 27f) en canaux de passage cintrés adjacents.

15. Epandeur selon l'une des revendications 9 à 14, caractérisé en ce que toutes les surfaces de déflection (21a à 21f) d'un même déflecteur d'épanouissement (18) présentent leur concavité tournée d'un même côté.

16. Epandeur selon l'une des revendications 9 à 14, caractérisé en ce que les surfaces de déflection (128a à 128i) d'un même déflecteur (125) d'épanouissement forment un faisceau sensiblement en éventail.

17. Epandeur selon l'une des revendications 1 à 6, caractérisé en ce que les moyens de répartition comprennent, pour au moins un groupe lanceur, un faisceau (50) de tube de répartition (50a à 50f) ayant des longueurs différentes, dont les parties d'extrémité amont (51) sont adjacentes les unes aux autres, présentent leurs axes sensiblement dans le plan moyen de la nappe projetée de produits granuleux, et parallèlement à la direction de déplacement de ladite nappe projetée, et divisent cette dernière en fractions contiguës de nappe qui sont chacune guidée par l'un des tubes jusqu'à son extrémité avale, décalée sensiblement dans la direction de déplacement de ladite nappe projetée, par rapport aux extrémités avales des autres tubes.

18. Epandeur selon la revendication 17, caractérisé en ce que l'extrémité avale de l'un au moins des tubes (50a à 50f) est équipée d'un déflecteur (52).

19. Epandeur selon l'une des revendications 17 et 18, caractérisé en ce que l'extrémité avale de l'un au moins des tubes (50a à 50f) est équipée d'un éclateur (53), vers lequel est dirigée la traction de nappe guidée dans le tube (50a à 50f) correspondant et sur lequel les produits granuleux de cette fraction de nappe rebondissent avant de retomber sur le sol.

20. Epandeur selon l'une des revendications 17 à 19, caractérisé en ce que l'extrémité avale (101) de l'un au moins des tubes (100a à 100e) est équipée d'un conduit souple (102) dirigé vers le sol et permettant l'épandage selon une ligne localisée.

21. Epandeur selon l'une des revendications 17 à 20, caractérisé en ce que l'extrémité avale d'au moins un tube de répartition est équipée d'un embout diviseur, divisant la fraction de nappe guidée dans le tube correspondant en deux parties dont chacune est répartie sur l'une de deux zones du sol qui sont décalées l'une par rapport à l'autre dans la direction de déplacement de la nappe projetée.

22. Epandeur selon l'une des revendications 17 à 21, caractérisé en ce que l'un au moins des tubes du faisceau (50) est cintré sur au moins une partie de sa longueur (50f) de façon à rapprocher son extrémité avale d'un plan vertical (P) passant sensiblement par la base de la trémie (1) de l'épandeur.

23. Epandeur selon l'une des revendications 7 à 22, caractérisé en ce que lesdits moyens de répartition (38') sont, pour au moins un groupe lanceur, montés pivotant sur le châssis autour d'au moins un axe (58') sensiblement parallèle aux axes (56, 58) des rouleaux (55, 57) délimitant la goulotte de projection correspondante, afin de permettre le réglage de l'orientation desdits moyens de répartition (38') et donc le réglage de la largeur d'épandage.

24. Epandeur selon l'une des revendications 1 à 23, caractérisé en ce que l'alimentation d'au moins un groupe lanceur en produits granuleux à partir de la trémie (1) est assurée par des moyens de dosage (8) faisant tomber par gravité, entre deux rouleaux (55, 59) dudit groupe lanceur une nappe de produits granuleux dont le plan moyen, selon son épaisseur, est sensiblement confondu avec le plan tangent commun auxdits deux rouleaux (55, 59).

25. Epandeur selon la revendication 24, caractérisé en ce que lesdits moyens de dosage comprennent un dispositif de distribution volumétrique comportant au moins un organe rotatif (8) entraîné en rotation dans une gouttière (6) alimentée en produits granuleux par une ouverture (3) à la base de la trémie (1).

26. Epandeur selon l'une des revendications 1 à 25, caractérisé en ce que l'alimentation d'au moins un groupe lanceur en produits granuleux à partir de la trémie (1) est assurée par des moyens de dosage comprenant une vanne (39) mobile et réglable en position vis-à-vis d'un bord d'une ouverture définie à la base de la trémie (1) entre ledit bord et une partie de la surface latérale externe d'un rouleau (33) d'au moins un groupe lanceur correspondant qui fait partiellement saillie dans la base de la trémie (1) et assure par sa rotation l'entraînement direct des produits granuleux vers le ou les groupes lanceurs correspondants.

27. Epandeur selon l'une des revendications 24 à 26, telle que rattachée à la revendication 5, caractérisé en ce que ses moyens de dosage sont communs aux deux groupes lanceurs de l'épandeur.

28. Epandeur selon l'une des revendications 1 à 4, caractérisé en ce qu'il comporte plusieurs groupes lanceurs adjacents, dont les premiers rouleaux (130a à 130d) sont de même rayon, disposés côte à côte et coaxiaux et dont les seconds rouleaux (131a à 131d) sont également de même rayon, disposés côte à côte et coaxiaux, les rouleaux (130a à 130d) de l'un des deux ensembles des rouleaux adjacents ainsi définis étant des rouleaux moteurs entraînés en rotation à des vitesses différentes l'un de l'autre tandis que les rouleaux (131a à 131d) de l'autre ensemble sont montés chacun fou en rotation autour de son axe et entraîné chacun par contact et frottement à partir du rouleau moteur (130a à 130d) correspondant, les moyens de répartition des produits granuleux comprenant des moyens (134, 136, 138, 139, 140) d'entraînement en rotation des rouleaux moteurs auxdites vitesses différentes.

29. Epandeur selon la revendication 28, telle que rattachée à l'une des revendications 3 et 4, caractérisé en ce que chacun des groupes lanceurs adjacents comprend une goulotte d'injection délimitée entre son premier rouleau (130a à 130d) et un troisième rouleau (132a) d'un ensemble de rouleaux de même rayon, disposés côte à côte et coaxiaux, et montés chacun fou en rotation autour de son axe.

30. Epandeur selon l'une des revendications 28 et 29, caractérisé en ce que lesdits moyens d'entraînement en rotation des rouleaux moteurs (130a à 130d) comprennent un jeu de poulies de renvoi étagées (139 à 139d), de diamètre différent l'une de l'autre, indépendantes l'une de l'autre et solidaires chacune en rotation de l'un des arbres (140a à 140d) d'un jeu d'arbres de transmission tubulaires et coaxiaux, dont chacun est solidaire en rotation de l'un respectivement des rouleaux moteurs (130a à 130d), ainsi qu'une poulie d'entraînement étagée (136) solidaire en rotation d'un arbre d'entraînement (134) et reliée à chacune des poulies de renvoi (139a à 139d) par une courroie d'entraînement 138a à 138d).

31. Epandeur selon l'une des revendications 1 à 30, caractérisé en ce qu'il comprend de plus deux volets latéraux (68, 69) limitant entre eux l'écoulement de la nappe de produits granuleux alimentant au moins un groupe lanceur à partir de la trémie (1), et au moins un obturateur (70) qui, ainsi que l'un au moins des volets latéraux, est mobile et réglable dans une direction sensiblement transversale à l'écoulement de ladite nappe afin d'en définir la largeur et/ou la position par rapport aux rouleaux (55, 57, 59) du ou des groupes lanceurs correspondants.

32. Epandeur selon l'une des revendications 1 à 31, caractérisé en ce que l'un au moins de ses groupes lanceurs est tel que les axes (12, 14) de ses rouleaux (11, 13) sont sensiblement parallèles à la direction de déplacement de l'épandeur.

33. Epandeur selon l'une des revendications 1 à 32, caractérisé en ce que l'un au moins de ses groupes lanceurs est tel que les axes (122, 124) de ses rouleaux (120, 121) sont inclinés sur la direction de déplacement de l'épandeur, et en particulier sensiblement perpendiculaires à ladite direction de déplacement.

34. Epandeur selon l'une des revendications 1 à 33, caractérisé en ce qu'il comprend, pour au moins un groupe lanceur, des moyens de variations et/ou de réglage de la vitesse de rotation d'au moins un rouleau.

## Claims

1. A broadcaster for granulated product force spreading comprising :
- a carrying frame (62', 62') having at least one rotatary motion transmission member mounted thereon to be mechanically operated by a motor,
- one hopper (1) mounted on said frame for containing granulated products (1) as a load capable of flowing through at least one opening (3) in the hopper (1) base,
- metering means (10) supplied with granulated products from at least one opening (3) in the hopper (1) base,
- granulated product accelerating and force spreading means (10) which are supported on said frame and are supplied with granulated products from metering means, and
- spread granulated product distribution means (18), said distribution means also being supported on said frame and wherein said accelerating and force spreading means (10) are arranged in at least one thrower unit comprising a first roller (11, 55) rotatably mounted on the frame for rotation about its fixed axis (12, 56) the outer side surface thereof provides a first moving endless surface defining together with a second moving endless surface a spreading chute having an inlet (15, 64) and outlet (16, 65) of which the cross-section of flow both gradually increases and decreases respectively, at least one endless surface being direct driven through said transmission member and producing a driving surface for driving the granulated products loaded in the spreading chute inlet (15, 64) up to said outlet (16, 65) in such a way as to impart said products between both moving endless surfaces sufficient linear speed to allow subsequent spreading thereof, characterized in that :
- the moving endless second surface also produced by the outer side surface of a second roller (13, 57) rotatably mounted on the frame for rotation about its axis (14, 58) and in such a position that the first roller (11, 55) and the second roller (13, 57) of which at least one of the two rollers (11, 55) and (13, 57) is coated with a peripheral lining made of resiliently ductile material, are essentially mutually tangential whereby the granulated products are spread from the spreading chute (15,16) in a thin layer, both said rollers (11, 55) and (13, 57) being cylindrical rollers the axis (12,14) of which are substantially parallel to one another and preferably substantially horizontal,
- said broadcaster further includes injection means (2) for injecting the granulated products into the spreading chute (64, 65) of at least one thrower unit, said injection means comprising an injection chute (62,63) having an inlet (62) and outlet (63) of which the cross-sections of flow both gradually increase and decrease respectively between the hopper (1) base (6) and the spreading chute (64, 65) of each corresponding thrower unit and defined by the outer side surfaces of two cylindrical rollers (55, 59) essentially outwardly mutually tangential and rotatably mounted on the frame, each for rotation about its own axis (56, 60) substantially parallel to the axis (58) of the second roller (57) of each corresponding thrower unit, one at least of the two rollers (55, 59) which define the injection chute (62, 63) being direct driven for rotation through said transmission member so as to provide a driving roller for driving granulated products loaded through the hopper (1) base into the injection chute inlet (62) up to the latter outlet (63), imparting them a linear speed such that the granulated products flow through the injection chute outlet (63) as a thin layer centered to the tangential plane common to both rollers (57, 59) defining said injection chute, said injection means also comprising for each corresponding thrower unit a frame supported curved injection deflector (61) the concavity of which is oriented towards the first roller (55) and which provides guidance for the granulated product layer flowing from the injection chute outlet (63) up to the spreading chute inlet (64).

2. A broadcaster according to claim 1, characterized in that the tangential plane common to both rollers (55, 59) defining the injection chute (62, 63) is substantially normal to the tangential plane common to both first (55) and second (57) rollers defining the spreading chute (64, 65) of each corresponding thrower unit.

3. A broadcaster according to one of claims 1 or 2, characterized in that the first roller (55) defining said spreading chute (64, 65) supplied from said injection chute (62, 63) provides simultaneously one of the two rollers (55, 59) defining said injection chute, whereas the other is the third roller (59) and the axis (56) of the first roller (55) being above the axis (58) of the corresponding second roller (57) preferably within said axis (58) of the latter with respect to the base (6) of the hopper (1).

4. A broadcaster according to claim 3, characterized in that each thrower unit comprises its own injection means the axis (60) of third roller (59) thereof is located within the axis (58) of the corresponding second roller (57) with respect to the base (6) of the hopper (1) as well as to a level located between the axis (56, 58) levels of the first (55) and second (57) rollers of the corresponding thrower unit, the roller(s) to be direct driven for rotation through said transmission member being for each unit either the first roller (55) or the second and third rollers (57, 59).

5. A broadcaster according to one of claims 1 to 3, characterized in that the axis (82, 84) of the first and third rollers (81, 83) are substantially located within same horizontal plane whereby said rollers define an injection chute (91, 92) substantially upright and said third roller (83) simultaneously defines together with a fourth cylindrical roller (87), also rotatably mounted on the frame for rotation about its axis (88) substantially parallel to the first (81), second (85) and third (83) roller axis (82, 84, 86) under said horizontal plane, whereby the third and fourth rollers (83, 87) are essentially outwardly mutually tangential, a second spreading chute (85, 96) similar to that (93, 94) defined by the first and second rollers (81, 85) therebetween, at least one of the third and fourth rollers (83, 87) being coated with a peripheral lining made of resilently ductile material, and at least one of the third and fourth rollers (83, 87) being direct driven for rotation from said transmission member in order to provide said accelerating and force spreading means as two thrower units having a common injection chute (91, 92) of which one comprises the first and second rollers (81, 85) and the other the third and fourth rollers (83, 87), each of them acting to cooporate with an associated distribution device (18'), the injection means also comprising additionnaly to the common injection chute (91, 92) and injection deflector (89) the concavity thereof is oriented towards the first roller (81) and which only extends onto a section of the injection chute (91, 92) axial dimension, a curved frame supported second injection deflector (90) the concavity thereof is oriented towards the third roller (83) and which is mounted in a position adjacent to said injection deflector (89), between the first and third rollers (81, 83) under the injection chute outlet (92) and along the remaining part of the latter axial dimension to cause the granulated product layer flowing from the injection chute (91, 92) to be divided in two portions of which each is guided by a corresponding injection deflector (89, 90) up to the corresponding spreading chute inlet (93, 95).

6. A broadcaster according to claim 5, characterized in that the second and fourth rollers (85, 87) and both injection deflectors (89, 90) have a same axial dimension which is essentially half that of the first and third rollers (81, 83) and wherein, on one hand, the second and fourth rollers (85, 87) and, on another hand, the two injection deflectors (89, 90) are axially mutually offset substantially according to their axial dimension value to cause the granulated product layer flowing from the injection chute (91, 92) to be divided in two portions substantially equal and to maximally restrain the axial requirement of the second and fourth rollers (85, 87).

7. A broadcaster according to one of claims 1 to 6 of the type wherein the distribution means comprise, at least for one thrower unit, a distribution deflector (38') to divide the granulated product layer flowing from the corresponding spreading chute into adjacent portions to be deflected within a plane normal to the axis (56, 58) of the first and second rollers (55, 57) defining said spreading chute into various paths having angular orientations which gradually vary between two outer slants with respect to the direction of the granulated product motion upon exit from said spreading chute, characterized in that the distribution deflector (38') has a continuous curved deflection surface, the concavity thereof is oriented towards the axis (58) of said second roller (57) and defined between an upstream edge (42') having a slant substantially null on the tangential plane common to said first and second rollers (55, 57) essentially contained within said tangential plane, two side edges (40', 41') and one downstream edge (43') defined by a curved cutting between the downstream ends of the two side edges (40, 41') whereby the deflection angle produced to any point of said cutting, between said common tangential plane and said deflection surface tangent intersecting said point within the corresponding plane normal to said axis (56, 58) of said first and second rollers (55, 57) is an angle which, when said point is offset from one end of said cutting to another, continuously varies between a minimum value of a side edge (40') and a maximal value of the other side edge (41') to result in said adjacent layer portions being guided without bursting by the deflector surface from upstream edge (42') to downstream edge (43') thereof, beyond which they travel freely along paths which are gradually slanted in accordance with the deflection surface tangents along downstream edge thereof from one side edge of said deflection surface to the other.

8. A broadcaster according to claim 7, characterized in that the deflection angle minimum value is almost null and the maximum value is in the range of 135°, whereby the broadcaster width extends from the loading point of the granulated products travelling along a substantially free path from the spreading chute outlet up to the loading point of the granulated products travelling along the most deflected path (44'g) under said broadcaster itself.

9. A broadcaster according to one of claims 1 to 6, characterized in that the distribution means include, at least for one thrower unit, a deflector (18) to permit spreading of the granulated products spread layer within a non upright plane substantially parallel to the rollers (11, 13) axis (12, 14) defining the corresponding spreading chute (15, 16) therebetween, said deflector (18) having a set of deflection surfaces (21a to 21g) mutually remote substantially in the direction of the rollers axis (12, 14), essentially normal to a plane parallel to said axis, each being curved between its upstream edge and downstream edge, the concavity thereof is oriented towards one of said axis two directions to cause the planes tangential to said deflection surfaces (21a to 21g) along downstream edge thereof to be slanted with respect to said axis (12, 14) according to an angle that varies gradually between a minimum value and a maximum value from one end of the set to the other, in order that said deflection surfaces define therebetween curved adjacent sections of flow, each having an inlet and outlet between said edges upstreams and downstreams respectively of both neighbouring deflection surfaces defining it, said upstream edges of said deflection surfaces (21a to 21f) dividing said spread layer into layer adjacent portions of which each is deflected for quidance within one said sections of flow up to exit, beyond which it travels freely along a path substantially within a plane tangential to the deflection surface having deflected it at upstream edge level of said deflection surface.

10. A broadcaster according to claim 9, characterized in that said maximum value is 90° and said minimum value is such that the corresponding path returns the layer portion (22a) travelling along same to the upright plane P across the supply hopper (1) base of the corresponding power unit.

11. A broadcaster according to one of claims 9 and 10, characterized in that each deflection surface (21'c to 21'e) includes a flat upstream section (26c to 26e), slightly slanted upon the flowing direction (F1) of the layer spread within said inlet of said cross-section of flow, preferably to an angle (gamma) inferior to 10° and long enough to allow the whole layer portion moving along said flowing direction and guided by said deflection surface (21'c to 21'e) to meet said upstream section (26c to 26e) of the latter before being deflected by a curved section (27c to 27e) of said deflection surface to cause said layer portion to contact said deflection surface without almost any bouncing of said granulated products onto such surface.

12. A broadcaster according to one of claims 9 to 11, characterized in that each deflection surface (21'c to 21'e) includes a flat downstream section (28c to 28e) succeeding to a curved section (27c to 27e) to define the orientation of the corresponding layer portion beyond corresponding downstream edge (29c to 29e).

13. A broadcaster according to one of claims 9 to 12, characterized in that each curved cross-section of flow is defined by a chanel comprising a bottom part (19), side opposite walls (21a to 21f), of which one is convex and the other is concave and produces the deflection surface corresponding to said cross-section of flow, each channel being preferably closed by higher wall (20) opposite said bottom part (19).

14. A broadcaster according to claim 13, characterized in that the channel bottoms are made of a single base plate (19), the channel side walls are defined by the opposite faces of the curved walls (21a to 21f) clamped to said base plate (19) normally to the latter, higher channel possible walls being made of a single cover plate (20), whereby the spreading deflector (18) has the appearance of a flat box the inner volume of which is subdivided by walls (21a, 27f) into adjacent curved passage channels.

15. A broadcaster according to one of claims 9 to 14, characterized in that all deflection surfaces (21a to 21f) of a single spreading deflector (18) have their concavity oriented to a same side.

16. A broadcaster according to one of claims 9 to 14, characterized in that all deflection surfaces (128a to 128i) of a single spreading deflector (125) result in a set substantially fan-shaped.

17. A broadcaster according to one of claims 1 to 6, characterized in that the distribution means include at least for one unit, a set (50) of distribution pipes (50a to 50f) of various lengths, having dowstream end sections (51) mutually adjacent the axis thereof being substantially within the mid plane of the granulated products spread layer parallely to the moving direction of said spread layer and dividing the latter into layer adjacent portions each guided by one of the pipes up to its downstream end, offset substantially in the moving direction of said spread layer with respect to the downstream ends of the other pipes.

18. A broadcaster according to claim 17, characterized in that the downstream end of at least one of the pipes (50a to 50f) is provided with a deflector (52).

19. A broadcaster according to one of claims 17 and 18, characterized in that the downstream end of at least one pipe (50a to 50f) is provided with a buster (53), the layer portion guided within the corresponding pipe (50a to 50f) being directed thereto with the granulated products of this layer portion bouncing thereupon before falling on the ground.

20. A broadcaster according to one of claims 17 to 19, characterized in that the downstream end (101) of at least one of the tubes (100a to 100e) is provided with a flexible duct (102) oriented to the ground to permit broadcasting according to a definite line.

21. A broadcaster according to one of claims 17 to 20, characterized in that the downstream end of at least one distribution pipe is provided a dividing joining piece whereby the layer portion guided within the corresponding pipe is divided into two parts each of which is distributed onto one of two ground areas which are mutually offset in the moving direction of the spread layer.

22. A broadcaster according to one of claims 17 to 21, characterized in that at least one of the set (50) pipes is curved at least partially lengthwise (50f) whereby the downstream end thereof is brought to an upright plane (P) substantially intersecting the hopper (1) base of the broadcaster.

23. A broadcaster according to one of claims 7 to 22, characterized in that said distribution means (38') are, at least for one thrower unit pivotally supported on said support structure at least about one axis (58') substantially parallel to the axis (56, 58) of the rollers (55, 57) whereby the corresponding spreading chute is defined to permit ajustment of said distribution means orientation (38') and thus ajustment in width of the broadcaster.

24. A broadcaster according to one of claims 1 to 23, characterized in that suppliance of at least one thrower unit with granulated products from the hopper (1) is ensured by said metering means (8) to archieve gravity dropping, from between two rollers (55, 59) of said thrower unit, a granulated product layer the mid plane of which, according to width, is substantially confused with the tangential plane common to the two said rollers (55, 59).

25. A broadcaster according to claim 24, characterized in that said metering means include a volumetric distribution device comprising at least one rotatary member (8) rotatably driven into a gutter (6) to be supplied with granulated products through an opening (3) in the hopper (1) base.

26. A broadcaster according to one of claims 1 to 25, characterized in that the suppliance of at least one granulated products thrower unit from the hopper (1) is ensured by the metering means comprising a moving valve (39) positionnaly adjustable with regard to the edge of said opening in the hopper (1) base between said edge and a portion of one roller (33) outer side surface of at least one corresponding thrower unit at least partially protruding into the hopper (1) base and which provides upon rotation direct driving of the granulated products to the corresponding thrower unit(s).

27. A broadcaster according to one of claims 24 to 26, as dependent to claim 5, characterized in that its metering means thereof are shared by two thrower units of said broadcaster.

28. A broadcaster according to one of claims 1 to 4, characterized in that it comprises several adjacent thrower units, the first rollers (130a to 130d) thereof having same radius in coaxial side to side arrangement, the second rollers (131a to 131d) thereof also having same radius in coaxial side to side arrangement, the rollers (130a to 130d) of one of the two so defined adjacent roller sets being power rollers driven into rotation at different interrelated speeds, whereas the rollers (131a to 131d) of the other set are each rotatably mounted for idling rotation about axis thereof, each to be driven by contact and friction through the corresponding power roller (130a to 130d), the granulated product distribution means comprising means (134, 136, 138, 139, 140) to provide rotatary driving of the power rollers at said different speeds.

29. A broadcaster according to claim 28, as dependent of one of claims 3 and 4, characterized in that each of the adjacent thrower units comprises an injection chute defined between first roller (130a to 130d) thereof and a third roller (132a) of a roller set of same radius in coaxial side to side arrangement, each mounted for idling rotation about axis thereof.

30. A broadcaster according to one of claims 28 and 29, characterized in that said rotatary driving means of said power rollers (130a to 130d) comprise a set of stepped return pulleys (139 to 139d) having mutually independant diameter, one differing from the other, for individual integral rotation with one of the shafts (140a to 140d) of a set of tubular coaxial transmission shafts, each of which rotates integrally with one of the power rollers (130a to 130d) respectively, and a stepped driving pulley (136) for integral rotation with a driving shaft (134) linked to each of the return pulleys (139a to 139d) by a driving belt (138a to 138d).

31. A broadcaster according to one of claims 1 to 30, characterized in that it further comprises two side shutters (68, 69) restricting therebetween the flowing of the granulated products layer to allow at least one thrower unit to be supplied by the hopper (1) and at least one gate (70) which, as well as one at least of the side shutters, is movable and ajustable in a direction essentially intersecting said layer flow whereby the width and/or position thereof is defined with respect to the rollers (55, 57, 59) of the corresponding thrower unit(s).

32. A broadcaster according to one of claims 1 to 31, characterized in that one at least of the thrower units thereof is such as the axis (12, 14) of its rollers (11, 13) are substantially parallel to the moving direction of said broadcaster.

33. A broadcaster according to one of claims 1 to 32, characterized in that one at least of the thrower unit thereof is such that the axis (122, 124) of its rollers (120, 121) are slanted to the moving direction of the broadcaster and is, in particular, substantially normal to said moving direction.

34. A broadcaster according to one of claims 1 to 33, characterized in that it comprises, at least for one thrower unit, means for varying and/or ajusting the rotatary speed of one roller at least .

## Patentansprüche

1. Schleuderstreuer für körniges Material durch Zwangsauswurf, umfassend
- ein Trägerchassis (62',62') auf dem wenigstens ein Bewegungsübertragungsorgan einer Rotationsbewegung montiert ist, welches dazu geeignet ist, mit einem Motor gekuppelt zu werden,
- einen auf das Chassis montierten Trichter (1), der dazu eingerichtet ist, eine Charge Granulat (2) aufzunehmen, welches durch wenigstens eine Öffnung (3) an der Basis des Trichters (1) ausfließen kann,
- Dosierungsmittel, welche ausgehend von wenigstens einer Öffnung (3) von der Basis des Trichters (1) gespeist werden,
- Mittel (10) zum Beschleunigen und Zwangsauswurf des Granulats, welche von dem Chassis getragen werden und ausgehend von den Dosierungsmitteln mit Granulat gespeist werden, und
- Verteilermittel (18) für das Granulat, welche ebenfalls durch das Chassis getragen werden und in denen die Mittel zum Beschleunigen und zum Zwangsauswurf (10) in wenigstens einer Gruppe Auswerfer angeordnet sind, welche eine erste Rolle (11,55) umfaßt, die auf dem Chassis um ihre feste Achse(12,56) drehbar angebracht ist und deren laterale äußere Oberfläche eine erste endlose, bewegliche Oberfläche bildet, die mit einer zweiten endlosen, beweglichen Oberfläche eine Auswurf-Förderrinne mit einem Eingang (15,64) und einem Ausgang (16,65) bildet, die einen Durchgangsquerschnitt aufweisen, der progressiv abnimmt bzw. zunimmt, wobei wenigstens eine der endlosen Oberflächen positiv von dem Übertragungsorgan weggeführt ist und eine Führungsoberfläche bildet, welche das in den Eingang (15,64) der Auswurfförderrinne eingeführte Granulat bis zu dem Ausgang (16,65) der letzteren derart mitnimmt, daß das Granulat zwischen den beiden endlosen beweglichen Oberflächen eine lineare Geschwindigkeit erhält, die dessen Auswurf gewährleistet,
**dadurch gekennzeichnet,**
daß
- die zweite endlose bewegliche Oberfläche ebenfalls durch die laterale äußere Oberfläche einer zweiten Rolle (13,57) gebildet ist, die um ihre Achse (14,58) drehbar auf dem Chassis montiert ist, und zwar in einer solchen Lage, daß die erste Rolle (11,55) und die zweite Rolle (13,57), von denen wenigstens die eine mit einem Umfangsbezug aus elastisch verformbarem Material versehen ist, die sich außen gegenseitig annähernd berühren, dergestalt, daß das Granulat aus der Auswurfförderrinne (15,16) als dünne Schicht ausgeworfen wird, wobei die Rollen (11,55) und (13,57) zylindrische Rollen sind, deren Achsen (12,14) zueinander annähernd parallel und vorzugsweise horizontal liegen,
- der Schleuderstreuer außerdem Mittel zur Eingabe des Granulats (2) in die Auswurfrinne (64,65) wenigstens einer Gruppe Auswerfer umfaßt, wobei die Eingabemittel eine Eingabeförderrinne (62,63) mit einem Eingang (62) und einem Ausgang (63) umfassen, deren Durchgangsquerschnitte fortlaufend abnehmen bzw. zunehmen und die zwischen der Basis (6) des Trichters (1) und der Auswurfförderrinne jeder zugehörigen Gruppe Auswerfer angeordnet ist und durch die lateralen äußeren Oberflächen dieser beiden zylindrischen Rollen (55,59) begrenzt ist, die sich außen annähernd berühren und um ihre Achse (56,60) drehbar auf dem Chassis annähernd parallel zu der Achse (58) der zweiten Rolle (57)jeder entsprechenden Gruppe Auswerfer montiert sind, von denen wenigstens eine der beiden Rollen (55,59), welche die Eingabeförderrinne (62,63) begrenzen, positiv in Drehbewegung ausgehend von dem Übertragungsorgan mitgenommen wird, derart, daß eine führende Rolle das eingegebene Granulat von der Basis des Trichters (1) in dem Eingang (62) des Eingabeförderers bis zu dem Ausgang des letzteren (63) mitnimmt, indem auf sie eine solche lineare Geschwindigkeit übertragen wird. daß das Granulat den Ausgang (63) der Eingabeförderrinne als eine zentziecte dünne Schisht auf der gemeinsamen Berührungsebene an den beiden Rollen (55,59), welche die Eingabeförderrinne begrenzen, verläßt, wobei die Eingabemittel auch für jede entsprechende Gruppe Auswerfer einen Eingabeablenker (61) umfassen, welcher von dem Chasis getragen wird und der mit einer Ausbuchtung, die zu der ersten Rolle (55) gewandt ist, gewölbt ist und der die Schicht des Granulats, welche den Ausgang (63) der Eingabeförderrinne verläßt, bis zu dem Eingang (64) der Ausfwurfförderrinne führt.

2. Schleuderstreuer nach Anspruch 1,
**dadurch gekennzeichnet,**
daß die Berührungsebene, welche den beiden die Eingabeförderrinne (62,63) begrenzenden Rollen (55,59) gemeinsam ist, wesentlich rechtwinklig zu der gemeinsamen Berührungsebene an der ersten (55) und der zweiten (57) Rolle ist, welche die Auswurfförderrinne (64,65) jeder entsprechenden Gruppe Auswerfer begrenzen.

3. Schleuderstreuer nach einem der Ansprüche 1 und 2,
**dadurch gekennzeichnet,**
daß die erste Rolle (55), welche eine Auswurfförderrinne (64,65) begrenzt, die von einer Eingabeförderrinne (62, 63) ausgehend gespeist ist, gleichzeitig eine der beiden Rollen (55,59) bildet, welche die Eingabeförderrinne begrenzen, wobei die andere eine dritte Rolle (59) ist und die Achse (56) der ersten Rolle (55) über der Achse (58) der entsprechenden zweiten Rolle (57) sowie vorzugsweise im Inneren der Achse (58) der letzteren bezüglish der Basis (6) des Trichters (1) angeordnet ist.

4. Schleuderstreuer nach Anspruch 3,
**dadurch gekennzeichnet,**
daß jede Gruppe Auswerfer ihre eigenen Eingabemittel umfaßt und daß die Achse (60) einer dritten Rolle (59) im Inneren der Achse (58) der zweiten entsprechenden Rolle (57) bezüglich der Basis (6) des Trichters (1) und in einer Höhe angeordnet ist, welche zwischen den Höhen der Achsen (55,58) der ersten (55) und zweiten (57) Rollen der entsprechenden Gruppe Auswerfer liegt, und daß die Rolle(n) positiv in Drehbewegung ausgehend von dem Übertragungsorgan mitgenommen wird bzw. werden, welches für jede Gruppe Auswerfer entweder die erste Rolle (55) oder die zweite und dritte Rolle (57,59) ist.

5. Schlernderstreuer nach einem der Ansprüche 1 bis 3,
**dadurch gekennzeichnet,**
daß die Achsen (82,84) der ersten und zweiten Rolle (81,83) wesentlich in einer gleichen horizontalen Ebene liegen, dergestalt, daß diese Rollen eine Eingabeförderrinne (91,92) begrenzen, die wesentlich vertikal ist, und daß die dritte Rolle (83) zusammen mit einer vierten zylindrischen Rolle (87) welche ebenfalls um ihre Achse (88) drehbar auf dem Chassis wesentlich parallel zu den Achsen (82,84,86) der ersten (81), zweiten (85) und dritten (83) Rolle montiert ist und unterhalb der genannten horizontalen Ebene angeordnet ist, dergestalt, daß die dritte und vierte Rolle (83,87) sich außen wesentlich miteinander berühren, eine zweite Auswurfförderrinne (85,96) analog zu derjenigen (93,94) bilden, welche zwischen den ersten und zweiten Rollen (81,85) begrenzt ist, wobei wenigstens eine der dritten und vierten Rollen (83,87) mit einem Umfangsbezug aus einem elastisch verformbaren Material versehen ist und wenigstens eine der dritten und vierten Rollen (83,87) positiv ausgehend von dem Übertragungsorgan in Drehung versetzt wird, dergestalt, daß die Mittel zum Beschleunigen und Zwangsauswurf als zwei Gruppen Auswerfer eingerichtet sind, welche eine gemeinsame Eingabeförderrinne (91,92) haben, wobei die eine die erste und zweite Rolle (81,85) umfaßt und die andere die dritte und vierte Rolle (83,87) umfaßt und wobei diese jeweils mit einem zugeordneten Verteilermittel (18') zusammenwirken, wobei die Eingabemittel ebenso darüber hinaus eine gemeinsame Eingabeförderrinne (91,92) und einen Eingabeablenker (89) mit einer Wölbung umfassen, welche zu der ersten Rolle (81) gewandt ist und die sich nur über einen Teil der axialen Abmessung der Eingabeförderrinne (91,92) erstreckt, wobei ein zweiter gewölbter Eingabeablenker (90) mit einer Wölbung, die zu der dritten Rolle (83) gewandt ist und von dem Chassis getragen ist und in einer Stellung benachbart dem Eingabeablenker zwischen der ersten und der zweiten Rolle (81,83) und unter dem Ausgang (92) der Eingabeförderrinne entlang dem verbleibenden Abschnitt der axialen Dimension der letzteren montiert ist, so daß die Schicht Granulat, welche den Eingabeablenker (91,92) verläßt, in zwei Teile unterteilt ist, von denen jeder durch einen entsprechenden Eingabeablenker (89,90) bis zum Eingang (93,95) der entsprechenden Auswurfförderrinne geleitet wird.

6. Schleuderstreuer nach Anspruch 5,
**dadurch gekennzeichnet,**
daß die zweite und vierte Rolle (85,87) und die beiden Eingabeablenker (89,90) eine gleiche axiale Abmessung haben, die wesentlich die Hälfte derjenigen der ersten und dritten Rolle (81,83) beträgt, und daß einerseits die zweite und vierte Rolle (85,87) sowie andererseits die beiden Eingabeablenker (89,90) axial gegenseitig wesentlich um den Betrag ihrer axialen Ausdehnung versetzt sind, dergestalt, daß die Schicht Granulat, welche aus der Eingabeförderrinne (91,92) austritt, in zwei wesentlich gleich große Abschnitte geteilt wird und daß im Maximum der axiale Platzdarf der zweiten und vierten Rolle (85,87) begrenzt wird.

7. Schleuderstreuer nach einem der Ansprüche 1 bis 6, der Bauweise, bei der die Verteilermittel für wenigstens eine Gruppe Auswerfer einen Verteilerablenker (38') umfassen, der die Schicht des Granulats, welche von der Auswurfförderrinne heraustritt, in benachbarte Teile unterteilt, die in einer Ebene rechtwinklig zu den Achsen (56,58) der ersten und zweiten Rolle (55,57), welche die Auswurfförderrinne begrenzen, entlang verschiedenen Bahnen abgelenkt werden, welche die Ausrichtungswinkel darstellen, die fortlaufend zwischen zwei äußeren Neigungen bezüglich der Ortsveränderungsrichtung des Granulats an dem Ausgang der Auswurfförderrinne variieren,
**dadurch gekennzeichnet,**
daß der Verteilerablenker (38') eine koncinuierliche Ablenkoberfläche darstellt, die mit einer Wölbung, die zu der Achse (58) der zweiten Rolle (57) gewandt ist, gekrümmt ist und zwischen einem stromaufwärts gelegenen Rand (42'), welcher eine Neigung von praktisch Null auf der Berührungsebene darstellt, welche der ersten und der zweiten Rolle (55,57) gemeinsam ist und annähernd in der Berührungsebene enthalten ist, zwei seitlichen Rändern (40',41') und einem stromabwärts gelegenen Rand (43'), der durch einen gekrümmten Ausschnitt begrenzt ist, der zwischen den stromabwärts gelegenen Enden der beiden seitlichen Ränder (40',41') definiert ist, dergestalt, daß der gebildece Ablenkwinkel für jeden Punkt des Ausschnittes zwischen der gemeinsamen Berührungsebene und der Tangente an der Ablenkoberfläche, die durch den Punkt hindurchgeht und in der entsprechenden Ebene rechtwinklig zu den Achsen (56,58) der ersten und zweiten Rolle (55,57) liegt, ein Winkel ist, der, wenn der Punkt von einem Ende zu dem anderen Ende des Ausschnittes verschoben wird, sich kontinuierlich zwischen einem kleinsten Wert an einem seitlichen Rand (40') und einem größten Wert an dem anderen seitlichen Rand (41') derart ändert, daß die benachbarten Teile der Schicht ohne Zerreißen durch die Ablenkoberfläche von ihrem stromaufwärts gelegenen Rand (42') zu ihrem stromabwärts gelegenen Rand (43') geleitet werden, worüber hinaus sie frei Bahnen folgen, die fortlaufend entsprechend den Tangenten an die Ablenkoberfläche entlang deren stromaufwärts gelegenen Rand und von einem seitlichen Rand der Ablenkoberfläche bis zu dessen anderem seitlichen Rand geneigt sind.

8. Schleuderstreuer nach Anspruch 7,
**dadurch gekennzeichnet,**
daß der kleinste Wert des Ablenkwinkels praktisch Null ist und der größte Wert in der Größenordnung von 135° liegt, dergestalt, daß sich die Breite des Verteilens von einem Punkt des Falls des Granulats, welches einer praktisch freien Bahn von dem Ausgang der Auswurfförderrinne folgt, bis zu einem Punkt des Falls des Granulats, welches der am meisten ausgelenkten Bahn (44'g) folgt und unter dem Schleuderstreuer selbst liegt, erstreckt.

9. Schleuderstreuer nach einem der Ansprüche 1 bis 6,
**dadurch gekennzeichnet,**
daß die Verteilermittel für wenigstens eine Gruppe Auswerfer einen Ablenker (18) zum Entfalten der ausgeworfenen Schicht des Granulats in einer Ebene umfassen, die nicht vertikal und wesentlich parallel zu Achsen (12,14) Rollen (11,13) umfaßt, welche die entsprechende Auswurfförderrinne (15,16) begrenzen, daß der Ablenker (18) ein Bündel Ahlenkobeflächen (21a bis 21g) darstellt, die gegeineinander einen Abstand näherungsweise in Richtung der Achsen (12,14) der Rollen, wesentlich rechtwinklig zu einer parallelen Ebene zu diesen Achsen haben und von denen jede zwischen ihrem stromaufwärts gelegenen Rand und ihrem stromabwärts gelegenen Rand gewölbt ist, wobei ihre Wölbung in einer der beiden Achsrichtungen dergestalt verläuft, daß die Berührungsebenen an diesen Ablenkoberflächen (21a bis 21g) entlang ihrem stromaufwärts gelegenen Rand zu den Achsen (12,14) um einen Winkel geneigt sind, welcher fortlaufend zwischen einem kleinsten Wert und einem größten Wert von einem Ende zu dem anderen des Bundels variiert, damit die Ablenkoberflächen zwischen sich gekrümmte und benachbarte Durchgange begrenzen, von denen jeder einen Eingang und einen Ausgang zwischen den Rändern stromaufwärts bzw. stromabwärts dieser beiden benachbarten Ablenkoberflächen, die sie begrenzen, darstellen, daß die stromaufwärts gelegenen Ränder der Ablenkoberflächen (21a bis 21f) die ausgeworfene Schicht in benachbarte Schichtteile, von denen jede abgelenkt ist, in einem der Durchgänge, die sie bis zum Ausgang leiten, teilen, von wo aus sie frei einer Bahn wesentlich der Berührungsebene an der Ablenkoberfläche, die sie abgelenkt hat, und in Hohe des stromaufwärts gelegenen Randes der Ablenkoberfläche folgt.

10. Schleuderstreuer nach Anspruch 9,
**dadurch gekennzeichnet,**
daß der größte Wert 90° beträgt und daß der kleinste Wert so groß ist, daß die entsprechende Bahn den Schichtteil (22a), welcher dieser Bahn folgt, zu der vertikalen Ebene (P) führt, welche durch die Basis des Speisetrichters (1) der entsprechenden Gruppe Auswerfer führt.

11. Schleuderstreuer nach einem der Ansprüche 9 und 10,
**dadurch gekennzeichnet,**
daß jede Ablenkoberfläche (21'c bis 21'e) einen stromaufwärts gelegenen, ebenen Abschnitt (26c bis 26e) darstellt, der auf der Fließrichtung (F1) der ausgeworfenen Schicht an dem Eingang der Durchgänge schwach, vorzugsweise um einen Winkel (γ) von unter 10° geneigt ist und genügend lang ist, damit der gesamte Schichtteil sich entsprechend der Fließrichtung verlagert und durch die Ablenkoberfläche (21'c bis 21'e) geleitet auf den stromaufwärts gelegenen Abschnitt (26c bis 26e) der letzteren trifft, bevor er durch einen gekrümmten Abschnitt (27c bis 27e) dieser Ablenkoberfläche dergestalt abgelenkt wird, daß der Schichtteil mit der Ablenkoberfläche praktisch ohne Rückprall des Granulats auf dieser Oberfläche in Berührung kommt.

12. Schleuderstreuer nach einem der Ansprüche 9 bis 11,
**dadurch gekennzeichnet,**
daß jede Abklenkoberfläche (21'c bis 21'e) einen stromaufwärts gelegenen, ebenen Abschnitt (28c bis 28e) darstellt, welcher einem gekrümmten Abschnitt (27c bis 27e) folgt und die Ausrichtung der Bahn des entsprechenden Schichtteils ausgehend von dem stromaufwärts gelegenen entsprechenden Rand (29c bis 29e) bestimmt.

13. Schleuderstreuer nach einem der Ansprüche 9 bis 12,
**dadurch gekennzeichnet,**
daß jeder gekrümmte Durchgang durch einen Kanal begrenzt ist, der eine Sohle (19), gegenüberstehende Seitenwände (21a bis 21f), von denen die eine konvex und die andere konkav ist und die Ablenkoberfläche entsprechend dem Durchgang begrenzt, aufweist, und daß jeder Kanal vorzugsweise durch eine obere Wand (20), welche der Sohle (19) gegenüberliegt, abgeschlossen ist.

14. Schleuderstreuer nach Anspruch 13,
**dadurch gekennzeichnet,**
daß die Sohlen der Kanäle durch eine einzige Grundplatte (19) gebildet sind, die Seitenwände der Kanäle durch gegenüberliegende Seiten von gekrümmten Trennwänden (21a bis 21f) definiert sind, die auf der Grundplatte (19) rechtwinklig zu dieser befestlgt sind, und die gegebenenfalls vorhandenen oberen Wände der Kanäle durch eine einzige Deckplatte (20) gebildet sind, derart, daß der Ablenker zum Entfalten (18) das Aussehen eines flachen Gehäuses hat, dessen Innenraum durch die Trennwände (21a, 27f) in gekrümmte benachbarte Durchgangskanäle unterteilt ist.

15. Schleuderstreuer nach einem der Ansprüche 9 bis 14,
**dadurch gekennzeichnet,**
daß alle Ablenkoberflächen (21a bis 21f) desselben Ablenkers zum Entfalten (18) nach derselben Seite gewölbt sind.

16. Schleuderstreuer nach einem der Ansprüche 9 bis 14,
**dadurch gekennzeichnet,**
daß die Ablenkoberflächen (128a bis 128i) des gleichen Ablenkers (125) zum Entfalten ein annähernd fächerförmiges Bündel bilden.

17. Schleuderstreuer nach einem der Ansprüche 1 bis 6,
**dadurch gekennzeichnet,**
daß die Verteilermittel für wenigstens eine Gruppe Auswerfer ein Bündel (50) Verteilerrohre (50a bis 50f) unterschiedlicher Längen umfassen, deren stromaufwärts gelegene Endabschnitte (51) zueinander benachbart liegen, ihre Achsen im wesentlichen in der Mittelebene der ausgeworfenen Schicht des Granulats und parallel zu der Verschieberichtung der ausgeworfenen Schicht liegen, und welche die letztere in benachbarte Schichtteile unterteilen, von denen jeder durch eines der Rohre bis zu dessen stromabwärts gelegenem Ende geführt sind, die annähernd in der verschieberichtung der ausgeworfenen Schicht bezüglich der stromabwärts gelegenen Enden der anderen Rohre versetzt sind.

18. Schleuderstreuer nach Anspruch 17,
**dadurch gekennzeichnet,**
daß das stromabwärts gelegene Ende wenigstens eines der Rohre (50a bis 50f) mit einem Ablenker (52) ausgestattet ist.

19. Schleuderstreuer nach einem der Ansprüche 17 bis 18,
**dadurch gekennzeichnet,**
daß das stromabwärts gelegene Ende wenigstens eines der Rohre (50a bis 50f) mit einem Zerteiler (53) ausgerüstet ist, der zu dem Schichtteil der durch das entsprechende Rohr (50a bis 50f) geführten Schicht gerichtet ist und auf dem das Granulat dieses Schichtteils abprallt, bevor es auf den Boden zurückfällt.

20. Schleuderstreuer nach einem der Ansprüche 17 bis 19,
**dadurch gekennzeichnet,**
daß das stromabwärts gelegene Ende (101) wenigstens eines der Rohre (100a bis 100e) mit einer weichen Leitung (102) ausgerüstet ist, welche gegen den Boden gerichtet ist und das Streuen entsprechend einer lokalisierten Linie gestattet.

21. Schleuderstreuer nach einem der Ansprüche 17 bis 20,
**dadurch gekennzeichnet,**
daß das stromabwärts gelegene Ende wenigstens eines Verteilerrohrs mit einem Teilerschirm ausgestattet ist, welcher den in dem entsprechenden Rohr geleiteten Schichtteil in zwei Teile teilt, von denen jeder auf einer der beiden Zonen des Bodens ausgebreitet ist, die gegeneinander bezüglich der Verschieherichtung der ausgeworfenen Schicht versetzt sind.

22. Schleuderstreuer nach einem der Ansprüche 17 bis 22,
**dadurch gekennzeichnet,**
daß wenigstens eines der Rohre des Bündels (50) auf wenigstens einem Abschnitt seiner Länge (50f) derart gekrümmt ist, daß sein stromabwärts gelegenes Ende einer vertikalen Ebene (P) angenähert ist, welche wesentlich durch die Basis des Trichters des Schleuderstreuers verläuft.

23. Schleuderstreuer nach einem der Ansprüche 7 bis 22,
**dadurch gekennzeichnet,**
daß die Verteilermittel (38') wenigstens hinsichtlich einer Gruppe Auswerfer auf dem Chassis um wenigstens eine Achse (58') schwenkbar gelagert sind, welche wesentlich parallel zu den Achsen (56,58) der Rollen (55,57) verlaufen, welche die entsprechende Auswurfförderrinne begrenzen, um die Steuerung der Orientierung der Verteilermittel (38') und dementsprechend die Steuerung der Streubreite zu gestatten.

24. Schleuderstreuer nach einem der Ansprüche 1 bis 23,
**dadurch gekennzeichnet,**
daß die Speisung wenigstens einer Gruppe Auswerfer von Granulat ausgehend von dem Trichter (1) durch Dosiermittel (8) gewährleistet ist, welche durch Schwerkraft zwischen zwei Rollen (55,59) der Gruppe Auswerfer hindurch eine Granulatschicht fallenlassen, deren Mittelebene entsprechend ihrer Dicke im wesentlichen mit der gemeinsamen Berührungsebene an den beiden Rollen (55,59) vereint ist.

25. Schleuderstreuer nach Anspruch 24,
**dadurch gekennzeichnet,**
daß die Dosierungsmittel eine volumetrische Verteilereinrichtung umfassen, die wenigsten ein Drehorgan (8) aufweist, welches in einer Rinne (6), die durch eine Öffnung (3) an der Basis des Trichters (1) mit Granulat gespeist wird, in Drehbewegung versetzt wird.

26. Schleuderstreuer nach einem der Ansprüche 1 bis 25,
**dadurch gekennzeichnet,**
daß die Speisung wenigstens einer Gruppe Auswerfer ausgehend von dem Trichter (1) durch Dosierungsmittel gewährleistet ist, die einen beweglichen Schieber (39) umfassen, dessen Stellung gegenüber einem Rand einer in der Basis des Trichters (1) ausgebildeten Öffnung zwischen dem Rand und einem Teil der lateralen äußeren Oberfläche einer Rolle (33) wenigstens einer entsprechenden Gruppe Auswerfer steuerbar ist, die wenigstens teilweise in die Basis des Trichters (1) ragt und durch ihre Drehung die unmittelbare Mitnahme des Granulats zu den entsprechenden Gruppen Auswerfer gewährleistet.

27. Schleuderstreuer nach einem der Ansprüche 24 bis 26, wie auf Anspruch 5 bezogen,
**dadurch gekennzeichnet,**
daß seine Dosierungsmittel den beiden Gruppen Auswerfer des Schleuderstreuers gemeinsam sind.

28. Schleuderstreuer nach einem der Ansprüche 1 bis 4,
**dadurch gekennzeichnet,**
daß er mehrere Gruppen benachbarter Auswerfer umfaßt, bei denen die ersten Rollen (130a bis 130d) den gleichen Radius aufweisen, nebeneinander achsgleich angeordnet sind, und bei denen die zweiten Rollen (131a bis 131d) ebenfalls den gleichen Durchmesser aufweisen, nebeneinander und achsgleich angeordnet sind, daß die Rollen (130a bis 130d) einer dieser beiden so eingerichteten Anordnungen von benachbarten Rollen führenden Rollen sind, die gegeneinander mit verschiedenen Geschwindigkeiten in Drehung versetzt werden, während die Rollen (131a bis 131d) der anderen Anordnung jeweils um ihre Achse lose beweglich gelagert sind, von denen jede durch Berührung und Reibung ausgehend von der entsprechenden führenden Rollen (130a bis 130d) mitgenommen wird, daß die Verteilermittel des Granulats Mittel (134,136,138,139,140) zur Mitnahme der führenden Rollen bei verschiedenen Geschwindigkeiten umfassen.

29. Schleuderstreuer nach Anspruch 28, wie er auf einen der Ansprüche 3 bis 4 bezogen ist,
**dadurch gekennzeichnet,**
daß jede der Gruppen benachbarter Auswerfer eine Eingabeförderrinne umfaßt, die zwischen ihrer ersten Rolle (130a bis 130d) und einer dritten Rolle (132a) einer Rollenanordnung gleichen Durchmessers begrenzt ist, die nebeneinander und achsgleich sowie jeweils um ihre Achse lose drehbeweglich gelagert sind.

30. Schleuderstreuer nach einem der Ansprüche 28 und 29,
**dadurch gekennzeichnet,**
daß die Mittel der Drehmitnahme führenden Rollen (130a bis 130d) einen Satz abgestufter Vorgelegerollen (139 bis 139d) unterschiedlichen Durchmessers und voneinander unabhängig drehfest mit jeweils einer der Wellen (140a bis 140d) eines Satzes rohrförmiger und gleichachsiger Übertragungswellen verbunden sind, von denen jede drehfest mit einer der führenden Rollen (130a bis 130d) in Verbindung steht, sowie eine abgestufte Mitnahmerolle (136), die drehfest mit einer Mitnahmewelle (134) verbunden ist und mit jeder der Vorgelegerollen (139a bis 139d) über einen Treibriemen (138 bis 138d) verbunden ist, umfasssen.

31. Schleuderstreuer nach einem der Ansprüche 1 bis 30,
**dadurch gekennzeichnet,**
daß er weiterhin zwei seitliche Klappen (68,69) umfaßt, die zwischen sich den Abfluß der Granulatschicht, die wenigstens eine Gruppe Auswerfer ausgehend von dem Trichter (1) speist, begrenzen und wenigstens einen Verschluß (70) umfaßt, der wie wenigstens eine der seitlichen Klappen beweglich und in einer Richtung steuerbar ist, die annähernd quer zu dem Abfluß der Schicht ist, um deren Breite und/oder Lage bezuglich der Rollen (55, 57,59) der entsprechenden Gruppe(n) Auswerfer zu bestimmen.

32. Schleuderstreuer nach einem der Ansprüche 1 bis 31,
**dadurch gekennzeichnet,**
daß wenigstens eine seiner Gruppen Auswerfer so ist, daß die Achsen (12,14) ihrer Rollen (11,13) annähernd parallel zu der Richtung Verschieberichtung des Schleuderstreuers verlaufen.

33. Schleuderstreuer nach einem der Ansprüche 1 bis 32.
**dadurch gekennzeichnet,**
daß wenigstens eine ihrer Gruppen Auswerfer so angeordnet ist, daß die Achsen (122,124) ihrer Rollen (120,121) zu der Ortsveränderungsrichtung des Schleuderstreuers und insbesondere annähernd rechtwinklig zu der Richtung der Ortsveränderung geneigt sind.

34. Schleuderstreuer nach einem der Ansprüche 1 bis 33,
**dadurch gekennzeichnet,**
daß er für wenigstens eine Gruppe Auswerfer Mittel zum Verändern und/oder steuern der Drehgeschwindigkeit wenigstens einer Rolle umfaßt.
